# EUROPÄISCHE PATENTANMELDUNG

(11) **EP 4 482 087 A1**
(43) Veröffentlichungstag der Anmeldung: **25.12.2024**
(21) Anmeldenummer: 24182514.0
(22) Anmeldetag: 17.06.2024
(51) Int. Cl.: H04L 9/40, H04W 4/40

(54) **VERFAHREN UND GENERATORVORRICHTUNG ZUR ERMITTLUNG VON FIREWALL-REGELN ANHAND VON KOMMUNIKATIONSBEZIEHUNGSDATEN**

(30) Priorität: 19.06.2023 DE 102023115932
(71) Anmelder: Vector Informatik GmbH, 70499 Stuttgart (DE)
(72) Erfinder: Reder, Simon, 70499 Stuttgart (DE)
(74) Vertreter: Patentanwälte Bregenzer und Reule Partnerschaftsgesellschaft mbB

(57) **Zusammenfassung**

Die Erfindung betrifft ein Verfahren zur Ermittlung von Firewall-Regeln für einen Kommunikationsknoten (10) eines Kommunikationsnetzwerks (6) eines Kraftfahrzeugs (5), wobei Steuergeräte (20, 30) des Kraftfahrzeugs (5) über den Kommunikationsknoten (10) miteinander verbunden sind und der Kommunikationsknoten (10) zur Übermittlung von Nachrichten (N20, N30) vorgesehen und ausgestaltet ist, anhand derer Funktionseinheiten (QF, ZF) der Steuergeräte (20, 30) einander Informationen übermitteln, wobei Kommunikationsbeziehungen (KD1, KD2) zwischen Funktionseinheiten (QF, ZF), die Bestandteile voneinander separater und jeweils mit dem Kommunikationsknoten (10) verbundener Steuergeräte (20, 30) bilden, in Kommunikationsbeziehungsdaten (KDB) gespeichert sind, die Adressdaten einer sendenden Quell-Funktionseinheit (QF) und/oder Ziel-Adressdaten einer empfangenden Ziel-Funktionseinheit (ZF) umfassen, wobei der Kommunikationsknoten (10) eine Firewall-Einrichtung (FW) zur Überprüfung von Nachrichten (N20, N30), die der Kommunikationsknoten (10) zwischen mit ihm verbundenen Steuergeräten (20, 30) übermitteln soll, anhand von Firewallregeln (FR) aufweist, wobei das Verfahren vorsieht:
- Ermitteln von Firewallregeln (FR) durch ein Analysemittel (AM) einer Generatorvorrichtung (GV) anhand der Kommunikationsbeziehungsdaten (KDB), wobei das Analysemittel (AM) eine Quell-Firewallregel (QR) anhand von der Quell-Adressdaten der Quell-Funktionseinheit (QF), die Nachrichten (N20, N30) gemäß einer jeweiligen Kommunikationsbeziehung (KD1, KD2) sendet und/oder eine Ziel-Firewallregel (ZR) anhand von Ziel-Adressdaten einer Ziel-Funktionseinheit (ZF), die Nachrichten (N20, N30) gemäß einer jeweiligen Kommunikationsbeziehung empfängt, ermittelt, wobei die Quell-Firewallregel (QR) Filterkriterien aufweist und dafür vorgesehen ist, dass die Firewall-Einrichtung (FW) eine von der Quell-Funktionseinheit (QF) gesendete Nachricht (N20, N30) nur dann an die Ziel-Funktionseinheit (ZF) weiterleitet, wenn die in der Nachricht (N20, N30) enthaltene Quell-Adressdaten der Quell-Funktionseinheit (QF) die Filterkriterien der Quell-Firewallregel (QR) erfüllen, und wobei die Ziel-Firewallregel (ZR) Filterkriterien aufweist und dafür vorgesehen ist, dass die Firewall-Einrichtung (FW) eine an die Ziel-Funktionseinheit (ZF) gerichtete Nachricht (N20, N30) nur dann an die Ziel-Funktionseinheit (ZF) weiterleitet, wenn die in der Nachricht (N20, N30) enthaltenen Ziel-Adressdaten der Ziel-Funktionseinheit (ZF) die Kriterien der Ziel-Firewallregel (ZR) erfüllen.

## Beschreibung

Die Erfindung betrifft ein Verfahren zur Ermittlung von Firewall-Regeln für einen Kommunikationsknoten eines Kommunikationsnetzwerks eines Kraftfahrzeugs, wobei Steuergeräte des Kraftfahrzeugs über den Kommunikationsknoten miteinander verbunden sind und der Kommunikationsknoten zur Übermittlung von Nachrichten vorgesehen und ausgestaltet ist, anhand derer Funktionseinheiten der Steuergeräte einander Informationen übermitteln, wobei Kommunikationsbeziehungen zwischen Funktionseinheiten, die Bestandteile voneinander separater und jeweils mit dem Kommunikationsknoten verbundener Steuergeräte bilden, in Kommunikationsbeziehungsdaten, insbesondere einer Kommunikationsbeziehungsdatenbank, gespeichert sind, wobei die Kommunikationsbeziehungsdaten Quell-Adressdaten einer eine jeweilige Nachricht gemäß der Kommunikationsbeziehung sendenden Quell-Funktionseinheit und/oder Ziel-Adressdaten einer die Nachricht empfangenden Ziel-Funktionseinheit umfassen, wobei der Kommunikationsknoten eine Firewall-Einrichtung zur Überprüfung von Nachrichten, die der Kommunikationsknoten zwischen mit ihm verbundenen Steuergeräten übermitteln soll, anhand von Firewallregeln aufweist.

Ein derartiges Kommunikationsnetzwerk ist beispielsweise ein Ethernet-Netzwerk oder ein Netzwerk, auf dem mit dem Internetprotokoll, beispielsweise in der Version 4 oder der Version 6, kommuniziert wird. An das Kommunikationsnetzwerk sind auch fremde Geräte anschließbar, so z.B. ein Mobilfunk-Gerät eines Benutzers, eine nachgerüstete Rückfahrkamera, eine Ladesteuerung einer Ladesäule, falls das Kraftfahrzeug ein Elektrofahrzeug ist, oder dergleichen. Der Anschluss von fremden Geräten an ein Kommunikationsnetzwerk eines Kraftfahrzeugs birgt stets die Gefahr, dass Schadsoftware eingeschleust wird oder gar die Steuerung des Kraftfahrzeugs übernommen wird. Im Extremfall ist das Fahrzeug nicht nur hinsichtlich seiner Fahrtüchtigkeit beeinträchtigt, sondern ist auch die Fahrsicherheit nicht mehr gewährleistet.

Das Kommunikationsnetzwerk ist schon dann gegenüber Angriffen gefährdet, wenn es mit einem weiteren Kommunikationsnetzwerk potenziell verbunden oder verbindbar ist, beispielsweise mit einem Mobilfunk-Netzwerk. Zum Beispiel kann ein Steuergerät des Kommunikationsnetzwerks eine Mobilfunk-Schnittstelle zur direkten Kommunikation mit einem Mobilfunknetz aufweisen.

Es ist daher die Aufgabe der vorliegenden Erfindung, ein verbessertes Verfahren zur Ermittlung von Firewallregeln für einen Kommunikationsknoten eines Kommunikationsnetzwerkes eines Kraftfahrzeugs bereitzustellen.

Zur Lösung der Aufgabe ist gemäß der Erfindung bei dem eingangs genannten Verfahren vorgesehen:
- Ermitteln von Firewallregeln durch ein Analysemittel einer Generatorvorrichtung anhand der Kommunikationsbeziehungsdaten, wobei das Analysemittel eine Quell-Firewallregel anhand von der Quell-Adressdaten der Quell-Funktionseinheit, die Nachrichten gemäß einer jeweiligen Kommunikationsbeziehung sendet und/oder eine Ziel-Firewallregel anhand von Ziel-Adressdaten einer Ziel-Funktionseinheit, die Nachrichten gemäß einer jeweiligen Kommunikationsbeziehung empfängt, ermittelt, wobei die Quell-Firewallregel Filterkriterien aufweist und dafür vorgesehen ist, dass die Firewall-Einrichtung eine von der Quell-Funktionseinheit gesendete Nachricht nur dann an die Ziel-Funktionseinheit weiterleitet, wenn die in der Nachricht enthaltene Quell-Adressdaten der Quell-Funktionseinheit die Filterkriterien der Quell-Firewallregel erfüllen, und wobei die Ziel-Firewallregel Filterkriterien aufweist und dafür vorgesehen ist, dass die Firewall-Einrichtung eine an die Ziel-Funktionseinheit gerichtete Nachricht nur dann an die Ziel-Funktionseinheit weiterleitet, wenn die in der Nachricht enthaltenen Ziel-Adressdaten der Ziel-Funktionseinheit die Kriterien der Ziel-Firewallregel erfüllen.

Zur Lösung der Aufgabe ist weiterhin eine Generatorvorrichtung gemäß der technischen Lehre des Anspruchs 14 oder eine Generatorvorrichtung mit Mitteln zur Ausführung des erfindungsgemäßen Verfahrens vorgesehen.

Wenn in der nachfolgenden Beschreibung Verfahrensmerkmale diskutiert sind, ist die Generatorvorrichtung zur Ausführung dieser Verfahrensmerkmale oder der Verfahrensschritte der jeweiligen Weiterbildung des erfindungsgemäßen Verfahrens ausgestaltet.

Es ist ein Grundgedanke dabei, dass eine ohnehin vorhandene Kommunikationsbeziehungsdatenbank oder ohnehin vorhandene Kommunikationsbeziehungsdaten dafür verwendet werden, automatisiert anhand der Generatorvorrichtung, insbesondere deren Analysemittel, Firewallregeln zu ermitteln. Dabei ist beides möglich, dass nämlich ausgehend von einer Quell-Funktionseinheit, d.h. einer Funktionseinheit, die Daten oder Informationen über den Kommunikationsknoten sendet, Quell-Firewallregeln definiert werden und/oder mit Bezug auf eine Ziel-Funktionseinheit Ziel-Firewallregeln generiert werden. So kann also beispielsweise die Firewall-Einrichtung des Kommunikationsknotens anhand einer Quell-Firewallregel überprüfen, ob eine von einer Funktionseinheit, also einer Quell-Funktionseinheit, gesendete Nachricht weitergeleitet werden kann. Dabei kann es noch keine Rolle spielen, an wen die Nachricht gerichtet ist, also welche Ziel-Funktionseinheit adressiert ist. Es ist aber auch möglich, dass in diesem Zusammenhang die Firewall-Einrichtung des Kommunikationsknotens anhand einer weiteren Firewallregel, nämlich der Ziel-Firewallregel, überprüft, ob die Nachricht insgesamt den Regularien zur Weiterleitung entspricht, d.h. dass sie wohl die Kriterien der zugeordneten Quell-Firewallregel als auch die Kriterien der zugeordneten Ziel-Firewallregel erfüllt. Somit können also beispielsweise 1-zu-1-Beziehungen zwischen einer Quell-Funktionseinheit und einer Ziel-Funktionseinheit durchgängig durch die Kombination einer Quell-Firewallregel mit einer Ziel-Firewallregel durch die Firewall-Einrichtung des Kommunikationsknotens überprüfbar sein.

Es ist nicht unbedingt notwendig, dass die Kommunikationsdaten sämtliche Kommunikationsbeziehungen zwischen den Funktionseinheiten des Kommunikationsnetzwerks enthalten. Es ist auch möglich, dass Kommunikationsbeziehungen beispielsweise durch eine benutzerseitige oder anderweitige Konfiguration nachträglich eingegeben werden. Man könnte bei den Merkmalen des Oberbegriffs des Anspruchs 1 auch sagen, dass die Generatorvorrichtung in den Kommunikationsdaten definierte oder anhand der Kommunikationsdaten bekannte Kommunikationsbeziehungen analysiert.

Es ist auch möglich, dass die Generatorvorrichtung und/oder das Verfahren gemäß der Erfindung nur einen Teil der in den Kommunikationsdaten definierten Kommunikationsbeziehungen analysiert, wobei ohne weiteres bevorzugt ist, dass die Generatorvorrichtung und/oder das Verfahren sämtliche in den Kommunikationsdaten definierten Kommunikationsbeziehungen zur Ermittlung von Firewallregeln analysiert.

Bei den Nachrichten handelt es sich vorzugsweise um Nachrichten gemäß dem Internetprotokoll, also sogenannte IP-Nachrichten. Die IP-Nachrichten können Nachrichten der Version 4 oder der Version 6 des Internetprotokolls sein. Selbstverständlich ist dies nicht als limitierende Definition zu verstehen, d.h. dass auch Nachrichten mit anderen Protokollen, die entsprechend Adressdaten von Quelle und Ziel enthalten, anhand von Quell-Firewallregeln und/oder Ziel-Firewallregeln, die gemäß der Erfindung ermittelt worden sind, überprüfbar sein.

Der erfindungsgemäße Ansatz funktioniert insbesondere auch deshalb, weil in einem Kraftfahrzeug typischerweise eine feste Netzwerk-Topologie vorhanden ist, d.h. die Anzahl und Art der vorhandenen Steuergeräte, deren Funktionseinheiten sowie die Verknüpfung über elektrische Leitungen und entsprechende Ports an den Kommunikationsschnittstellen ist festgelegt und wechselt nicht von Fahrzeug zu Fahrzeug. Selbstverständlich sind Variationen möglich, d.h. dass beispielsweise je nach Ausstattungsgrad des Kraftfahrzeugs unterschiedliche Steuergeräte und Funktionseinheiten und Funktionseinheiten und Steuergeräte in unterschiedlicher Anzahl zum Einsatz kommen. Auch für diese Varianten ist das Kommunikationsnetzwerk in einer vorbestimmten Topologie festgelegt, so dass ein automatisiertes Ermitteln von Firewallregeln gemäß der Erfindung möglich ist.

So sieht eine vorteilhafte Ausgestaltung der Erfindung vor, dass das Analysemittel der Generatorvorrichtung zur Erzeugung der Firewallregeln eine Liste der in dem Kommunikationsnetzwerk enthaltenen Steuergeräte ermittelt. Es ist auch möglich, dass das Analysemittel der Generatorvorrichtung eine Topologie des Kommunikationsnetzwerks zur Erzeugung der Firewallregeln analysiert. Die Analysemittel der Generatorvorrichtung oder die Generatorvorrichtung sind also zur Ermittlung einer Liste der Steuergeräte und/oder zu einer Analyse der Topologie des Kommunikationsnetzwerks vorteilhaft ausgestaltet.

Weiterhin ist es vorteilhaft, wenn das Analysemittel zur Erzeugung der Firewallregeln ermittelt, welche Funktionseinheiten das Steuergerät aufweist. Bei den Funktionseinheiten kann es sich beispielsweise um Dienste und/oder Signalgeneratoren handeln. Ein Dienst kann ein Dienst-Anbieter oder Service-Provider sein. Ein Dienst kann aber auch ein nutzender Dienst oder Service-Consumer sein. Regelmäßig ist in dem Kommunikationsnetzwerk festgelegt, welche Dienst-Anbieter mit welchen verbrauchenden Diensten logisch verknüpft sind, so kann also beispielsweise ein an einem ersten Steuergerät angeschlossener Dienst-Anbieter als eine Quell-Funktionseinheit dienen, die einen oder mehrere Ziel-Funktionseinheiten anderer, zweiter Steuergeräte mit Informationen versorgt, beispielsweise Drehzahl des Motors, Einstellung einer Beleuchtung oder dergleichen, die dann entsprechend konsumierende Dienste sind. Weiterhin ist es möglich, dass eine Funktionseinheit ein Signalgenerator ist, der Signale für eine Reihe von Nutzern dieser Signale bereitstellt. Beispielsweise handelt es sich bei diesen Signalen um eine Fahrgeschwindigkeitsinformation des Kraftfahrzeugs oder dergleichen, die für mehrere Funktionseinheiten, die an unterschiedlichen Steuergeräten vorgesehen sein können, interessant sind.

Eine Funktionseinheit ist beispielsweise als ein Funktionsmodul mit Programmcode ausgestaltet, der durch einen Prozessor des Steuergeräts zur Bereitstellung der Funktionen der Funktionseinheit ausführbar ist. Das Steuergerät kann also beispielsweise mehrere Softwaremodule aufweisen, die jeweils ein Funktionsmodul darstellen oder bereitstellen und einen Dienst, Signalgenerator oder dergleichen bilden. Ohne weiteres können auch Sensoren oder dergleichen an das Steuergerät angeschlossen sein, die dann als Funktionseinheiten oder Signalgeneratoren dienen. Die Aufbereitung der Signale von Sensoren kann jedoch als Softwarefunktion an einem jeweiligen Steuergerät ausgeführt sein, d.h. dass die Funktionseinheit Signale des Sensors als Dienst oder Signalgenerator bereitstellt.

Ein Steuergerät des Kommunikationsnetzwerks weist beispielsweise einen Port auf, über den eine Quell-Funktionseinheit und/oder eine Ziel-Funktionseinheit kommunizieren können. Der Port ist vorzugsweise ein Protokoll-Port, zum Beispiel ein UDP-Port. Es ist aber auch möglich, dass der Port ein Hardware-Port ist, also beispielsweise ein physikalische Anschluss. Zudem ist möglich, dass unter einem Port eine Kombination aus einem Hardware-Anschluss und einem Protokoll-Port verstanden wird.

Es ist möglich, dass mehrere Funktionseinheiten einen gemeinsamen Protokoll-Port nutzen. In diesem Fall ist vorteilhaft vorgesehen, dass diese mehreren, beispielsweise zwei, Funktionseinheiten von derselben Software-Applikation bereitgestellt werden. Beispielsweise kann eine Software-Applikation zwei oder weitere Dienste bereitstellen, also z.B. zwei Dienstanbieter bereitstellen, die jeweils denselben Protokoll-Port des Steuergeräts nutzen.

Bei einer festen Konfiguration oder Topologie eines Kommunikationsnetzwerkes sind Funktionseinheiten in der Regel bestimmten Ports eines Steuergeräts zugeordnet. Dementsprechend ist es vorteilhaft, wenn Adressdaten eines solchen Ports den jeweiligen Quell-Firewallregeln oder Ziel-Firewallregeln hinzugefügt werden. So sieht eine vorteilhafte Maßnahme vor, dass das Analysemittel Adressdaten eines Ports des Steuergeräts, der zum Senden von Nachrichten einer Quell-Funktionseinheit gemäß einer der Quell-Funktionseinheit zugeordneten Kommunikationsbeziehung verwendet wird, einer der Quell-Funktionseinheit zugeordneten Quell-Firewallregel hinzufügt. Somit ist es also möglich, dass die Firewallregel als ein Filterkriterium die Adressdaten des Ports enthält. Auch hinsichtlich von Ziel-Firewallregeln ist eine solche Maßnahme vorteilhaft. Das Analysemittel ist vorteilhaft dazu ausgestaltet, Adressdaten eines Ports des Steuergeräts, der zum Weiterleiten von Nachrichten an eine Ziel-Funktionseinheit gemäß einer der Ziel-Funktionseinheit zugeordneten Kommunikationsbeziehung verwendet wird, einer der Ziel-Funktionseinheit zugeordneten Ziel-Firewallregel hinzufügt. In allgemeinerer Formulierung ist es vorteilhaft, wenn das Analysemittel Adressdaten eines jeweiligen Ports des Steuergeräts, den eine Funktionseinheit zum Senden oder Empfangen von Nachrichten gemäß einer jeweiligen Kommunikationsbeziehung verwendet, einer der Funktionseinheit zugeordneten Quell-Firewallregel, wenn die Funktionseinheit eine Quell-Funktionseinheit ist, oder einer der Funktionseinheit zugeordneten Ziel-Firewallregel hinzufügt, wenn diese Funktionseinheit eine Ziel-Funktionseinheit ist.

Auch die Adressdaten einer jeweiligen Funktionseinheit, beispielsweise ein Identifizierer der jeweiligen Funktionseinheit, ist vorteilhaft einer jeweiligen Firewallregel hinzugefügt, so dass sozusagen bis zur Identifizierung der jeweiligen Funktionseinheit eine Überprüfung anhand der Firewallregel möglich ist. Vorteilhaft bildet also eine Adresse oder ein Identifizierer einer jeweiligen Funktionseinheit ein Filterkriterium einer Firewallregel.

Das Analysemittel ist vorteilhaft dazu ausgestaltet, Adressdaten einer Quell-Funktionseinheit, die Nachrichten gemäß einer der Quell-Funktionseinheit zugeordneten Kommunikationsbeziehung sendet, einer der Quell-Funktionseinheit zugeordneten Quell-Firewallregel hinzufügt.

Während beispielsweise in frei konfigurierbaren Kommunikationsnetzwerken regelmäßig verschiedene Anschlüsse, insbesondere verschiedene physikalische Anschlüsse, von Kommunikationsknoten genutzt werden, d.h. dass beispielsweise ein Patch-Kabel an einen bestimmten physikalischen Anschluss angeschlossen werden, ist dies beim Kraftfahrzeug unüblich. Insbesondere sind feste Schnittstellen und feste Verkabelungen vorgesehen, d.h. es werden für bestimmte Steuergeräte bestimmte Ports des Kommunikationsknotens verwendet.

An dieser Stelle sei erwähnt, dass der Kommunikationsknoten beispielsweise ein Switch, insbesondere ein Ethernet-Switch ist. Auch wenn bei einem solchen Switch an sich eine freie Verkabelung möglich wäre, ist jedoch vorteilhaft eine fest definierte Verkabelung beim Kraftfahrzeug vorgesehen, was dann auch in den Kommunikationsbeziehungsdaten bzw. der Kommunikationsbeziehungsdatenbank so definiert ist.

Gerade dieses Szenario ermöglicht eine vorteilhafte Ausgestaltung der Erfindung, die nachfolgend erläutert ist.

Vorteilhaft ist vorgesehen, dass das Analysemittel dazu ausgestaltet ist, zu einer Quell-Firewallregel, die einer Quell-Funktionseinheit zugeordnet ist, Adressdaten eines physikalischen Anschlusses eines Kommunikationsknotens hinzufügt, wobei dieser physikalische Anschluss zum Senden von Nachrichten der Quell-Funktionseinheit gemäß der Quell-Funktionseinheit zugeordneten Kommunikationsbeziehung verwendet wird. Beispielsweise ist das Steuergerät an den physikalischen Anschluss dieses Kommunikationsknotens angeschlossen und sendet darüber die Nachrichten, die von der Quell-Funktionseinheit erzeugt werden oder die von dieser erzeugte Informationen enthält, an den Kommunikationsknoten. Auch hinsichtlich einer Ziel-Firewallregel lässt sich diese Maßnahme realisieren. Vorteilhaft ist vorgesehen, dass das Analysemittel dazu ausgestaltet ist, zu einer Ziel-Firewallregel, die einer Ziel-Funktionseinheit zugeordnet ist, Adressdaten eines physikalischen Anschlusses eines Kommunikationsknotens hinzufügt, wobei der physikalische Anschluss zu einem Weiterleiten an die Ziel-Funktionseinheit gemäß einer der Ziel-Funktionseinheit zugeordneten Kommunikationsbeziehung verwendet wird.

Vorteilhaft ist vorgesehen, dass das Analysemittel Adressdaten eines physikalischen Anschlusses des Kommunikationsknotens, den eine Funktionseinheit zum Senden oder Empfangen von Nachrichten gemäß einer jeweiligen Kommunikationsbeziehung verwendet, an der Funktionseinheit zugeordneten Quell-Firewallregel oder Ziel-Firewallregel hinzufügt.

Ein vorteilhaftes Konzept sieht vor, dass das Analysemittel ermittelt oder zu einer Ermittlung ausgestaltet ist, ob ein Steuergerät, welches eine Quell-Funktionseinheit aufweist, eine feste IP-Adresse aufweist und einer der Quell-Funktionseinheit zugeordneten Quell-Firewallregel diese feste IP-Adresse des Steuergeräts hinzufügt. Ein vorteilhaftes Konzept sieht vor, dass das Analysemittel dazu ausgestaltet ist, einer Quell-Firewallregel, die zu einer Quell-Funktionseinheit, die zu einem Steuergerät mit einer festen IP-Adresse gehört, die feste IP-Adresse des Steuergeräts hinzufügt. Ein weiterhin vorteilhaftes Konzept sieht vor, dass das Analysemittel dazu ausgestaltet ist, einer Ziel-Firewallregel, die zu einer Ziel-Funktionseinheit, die zu einem Steuergerät mit einer festen IP-Adresse gehört, die feste IP-Adresse des Steuergeräts hinzufügt.

Bei der Analyse der Kommunikationsbeziehungen oder der Kommunikationsbeziehungsdatenbank überprüft also das Analysemittel beispielsweise zunächst, ob ein Steuergerät eine feste IP-Adresse aufweist und führt die vorgenannten Maßnahmen durch. Wenn jedoch das Analysemittel ermittelt, dass das Steuergerät keine feste IP-Adresse aufweist, ist die nachfolgende Maßnahme besonders vorteilhaft. Selbstverständlich ist es auch sinnvoll, die nachfolgende Maßnahme bei einem Steuergerät mit einer festen IP-Adresse durchzuführen, beispielsweise zur Vermeidung sogenanntes Spoofing-Angriffe. Bei einem Spoofing-Angriff nutzt ein Angreifer eine IP-Adresse im Zusammenhang mit einer MAC-Adresse, der die IP-Adresse an sich nicht zugeordnet werden darf oder die für die IP-Adresse nicht freigegeben ist. Anhand einer geeigneten Firewallregel ist es dann möglich, die vom Angreifer genutzte nicht zulässige Kombination von IP-Adresse und MAC-Adresse zu ermitteln.

Das Analysemittel ist vorteilhaft dazu ausgestaltet, einer Quell-Firewallregel, die einer Quell-Funktionseinheit zugeordnet ist, die beispielsweise zu einem Steuergerät ohne feste IP-Adresse gehört, aber vorteilhaft auch zu einem Steuergerät mit einer festen IP-Adresse gehören kann, eine MAC-Adresse des Steuergeräts hinzuzufügen. Das Steuergerät mit der Quell-Funktionseinheit kann eine feste IP-Adresse aufweisen oder eine dynamische IP-Adresse aufweisen oder keine feste IP-Adresse aufweisen.

In Bezug auf eine Ziel-Firewallregel kann dieselbe Maßnahme sinngemäß auch vorgesehen sein. Das Analysemittel ist vorteilhaft dazu ausgestaltet, einer Ziel-Firewallregel, die einer Ziel-Funktionseinheit zugeordnet ist, die zu einem Steuergerät eine MAC-Adresse des Steuergeräts hinzuzufügen. Das Steuergerät mit der Ziel-Funktionseinheit kann eine feste IP-Adresse aufweisen oder eine dynamische IP-Adresse aufweisen oder keine feste IP-Adresse aufweisen. Es kann also vorgesehen sein, dass das Analysemittel ermittelt, ob ein Steuergerät, welches eine Quell-Funktionseinheit oder eine Ziel-Funktionseinheit aufweist, keine feste IP-Adresse aufweist, und einer der Quell-Funktionseinheit zugeordneten Quell-Firewallregel eine MAC-Adresse des Steuergeräts hinzuzufügen und/oder einer der Ziel-Funktionseinheit zugeordneten Ziel-Firewallregel eine MAC-Adresse des Steuergeräts hinzuzufügen.

Somit kann also eine Firewallregel beispielsweise den Port des Kommunikationsknotens, insbesondere eines Switches, die IP-Adresse eines Steuergeräts oder die MAC-Adresse eines Steuergeräts, welches eine Funktionseinheit aufweist, sowie den Port, den die Funktionseinheit nutzt, enthalten. Vorteilhaft enthält die Firewallregel auch zudem noch eine Adresse der Funktionseinheit, beispielsweise deren Identifizierung.

Neben dem sozusagen automatisierten Ermitteln von Firewallregeln (Quell-Firewallregeln und/oder Ziel-Firewallregeln) ist es vorteilhaft, wenn auch andere, beispielsweise durch einen Benutzer definierte Firewallregeln oder Firewallregeln, die in einer Datei bereitgestellt werden, hinzugefügt werden können. So kann beispielsweise durch entsprechende Konfiguration eine Firewallregel für ein an einen Anschluss des Kommunikationsnetzwerkes des Kraftfahrzeugs anschließbares Gerät eines Benutzers, einer Ladesäule, einer Onboard-Diagnoseschnittstelle (OBD-Schnittstelle) oder dergleichen, eine Firewallregel definiert oder definierbar sein, die anhand der nachfolgenden Maßnahme Eingang in die Firewallregeln für die Firewall-Einrichtung des Kommunikationsknoten finden. Ein weiteres Beispiel für eine benutzerdefinierte Firewallregel ist z.B. ein Infrastruktur-Protokoll, z.B. ARP, ein Zeitsynchronisationsprotokoll, wie das Precision Time Protocol (PTP)), für die es keine festen Kommunikationsbeziehungen gibt.

Ein vorteilhaftes Konzept sieht ein Hinzufügen von über eine Eingabeschnittstelle der Generatorvorrichtung empfangener Firewallregeln zu den von durch das Analysemittel bereitgestellten Firewallregeln durch Zusammenfassungsmittel der Generatorvorrichtung vor. Mithin ist also bei der Generatorvorrichtung ein Zusammenfassungsmittel vorgesehen, welches zu einem derartigen Hinzufügen von Firewallregeln ausgestaltet ist. Es ist möglich, dass die Generatorvorrichtung eine grafische Bedienoberfläche als Eingabeschnittstelle aufweist. Die Eingabeschnittstelle kann aber auch eine Datei mit einer oder mehreren Firewallregeln empfangen können bzw. zu deren Empfang ausgestaltet sein. Eine über eine Eingabeschnittstelle definierte Firewallregel kann eine Quell-Firewallregel oder eine Ziel-Firewallregel oder eine Kombination aus beidem sein.

Wenn nun eine ganze Reihe von Firewallregeln, seien es Quell-Firewallregeln oder Ziel-Firewallregeln, bereitgestellt sind, müssen zu deren Ausführung bei der Firewall-Einrichtung des Kommunikationsknotens, beispielsweise des Switches, entsprechende Hardware-Ressourcen vorhanden sein. Zudem kann sich die Überprüfung von Nachrichten sehr langwierig gestalten, wenn eine Vielzahl von Firewallregeln zu beachten sind. Hier schaffen die nachfolgend erläuterten Maßnahmen Abhilfe:
Vorteilhaft ist vorgesehen, dass ein Compiler der Generatorvorrichtung vorhanden ist, der zum Zusammenfassen mehrerer Ziel-Firewallregeln und/oder mehrerer Quell-Firewallregeln ausgestaltet und/oder vorgesehen ist. Somit können beispielsweise aus zwei Ziel-Firewallregeln eine einzige Ziel-Firewallregel oder aus zwei Quell-Firewallregeln eine einzige Quell-Firewallregel geschaffen werden. Auf diesem Wege sind beispielsweise redundante Firewallregeln ermittelbar, wovon nur eine der Firewallregeln nach der Zusammenfassung durch den Compiler verbleibt.

Man kann dieses Zusammenfassen von Firewallregeln durch den Compiler auch als eine Optimierung eines Satzes von Ziel-Firewallregeln und/oder eine Optimierung eines Satzes Quell-Firewallregeln verstehen, die der Firewall-Einrichtung des Kommunikationsknotens bereitgestellt werden.

Der Compiler kann beispielsweise Ziel-Firewallregeln oder Quell-Firewallregeln dann zusammenfassen, wenn deren Handlungsanweisungen, nämlich eine Nachricht zu blockieren oder weiterzuleiten, identisch sind. Beispielsweise ist der Compiler zu einer Prüfung ausgestaltet, die Handlungsanweisung zu überprüfen.

Weiterhin ist es vorteilhaft, wenn der Compiler Ziel-Firewallregeln oder Quell-Firewallregeln, also beispielsweise zwei Ziel-Firewallregeln oder zwei Quell-Firewallregeln dann zusammenfasst, wenn deren Filterkriterien, beispielsweise in den Filterkriterien definierte Adressbereiche, ganz oder teilweise identisch sind.

Wenn also beispielsweise für gleiche Adressbereiche gleiche Handlungsanweisungen bestehen, kann der Compiler mindestens zwei Ziel-Firewallregeln zusammenfassen oder im Falle von Quell-Firewallregeln mindestens zwei Quell-Firewallregeln zusammenfassen.

Es ist vorteilhaft, wenn der Compiler zu einer iterativen Überprüfung und/oder Zusammenfassung von Firewallregeln ausgestaltet ist. Ein vorteilhaftes Konzept sieht vor, dass der Compiler Firewallregeln iterativ zusammenfasst, wobei der Compiler eine aus zusammengefassten Firewallregeln mit einer weiteren Firewallregel kombiniert oder mit dieser zusammenfasst. Dabei kann es sich um eine Quell-Firewallregel handeln, die mit bereits zusammengefassten Quell-Firewallregeln kombiniert oder mit diesen zusammengefasst wird. Es ist aber auch möglich, dass diese Methodik bei Ziel-Firewallregeln angewendet wird, so dass aus zusammengefassten Ziel-Firewallregeln und einer weiteren Ziel-Firewallregel eine einzige Ziel-Firewallregel durch den Compiler gebildet wird.

Eine vorteilhafte Variante sieht vor, dass der Compiler bei der Bildung der dritten Firewallregel einen ersten Adressbereich der ersten Firewallregel und einen zweiten Adressbereich der zweiten Firewallregel zu einem gemeinsamen, den ersten Adressbereich und den zweiten Adressbereich umfassenden dritten Adressbereich der dritten Firewallregel kombiniert, wenn die Filterkriterien der ersten Firewallregel und der zweiten Firewallregel dieselbe Handlungsanweisung für die Firewall-Einrichtung aufweisen, wobei die Handlungsanweisung entweder eine Weiterleitungsanweisung zu einem Weiterleiten oder eine Blockierungsanweisung zu einem Blockieren von Nachrichten ist. Wenn also ein und dieselbe Handlungsanweisung bei den beiden miteinander zu kombinierenden ersten und zweiten Firewallregeln, beispielsweise Quell-Firewallregeln, vorhanden ist, werden von dem Compiler die Adressbereiche der ersten und zweiten Firewallregel zu einem dritten Adressbereich kombiniert. So können am Port des Steuergeräts zwei unterschiedliche Funktionseinheiten angeschlossen sein, die abgesehen von ihrer eigenen Adresse Nachrichten, also beispielsweise einem Dienste-Identifizierer, Nachrichten mit denselben Adressdaten versenden, also beispielsweise Port und IP-Adresse des Steuergeräts, wobei das Steuergerät auch an einen vorbestimmten Anschluss oder Port des Kommunikationsknotens angeschlossen ist. Wenn beide Dienste also zulässige Nachrichten versenden dürfen, die Handlungsanweisung in diesem Fall beispielsweise eine Weiterleitungsanweisung ist, kann der Compiler eine Firewallregel definieren, die die Adresse des Steuergeräts, des gemeinsamen Ports der Funktionseinheiten (Dienste) und vorteilhaft den Port des Switches enthält, und zudem einen Adressbereich, der die Adressen oder Identifizierer beider Funktionseinheiten umfasst.

Eine Firewallregel, die eine Blockierungsanweisung als Handlungsanweisung enthält, kann man auch als eine Blacklist-Firewallregel bezeichnen. Wenn die Handlungsanweisung eine Weiterleitungsanweisung ist, kann die Firewallregel auch als eine Whitelist-Firewallregel bezeichnet werden.

Eine vorteilhafte Maßnahme sieht nun vor, dass die Generatorvorrichtung beispielsweise im Zuge der Zusammenfassung von Firewallregeln oder Optimierung von Firewallregeln eine Blacklist-Firewallregel in eine Whitelist-Firewallregel umwandelt und/oder umgekehrt, um dadurch die Anzahl der Firewallregeln, beispielsweise der Quell-Firewallregeln oder der Ziel-Firewallregeln oder beider, zu reduzieren.

So sieht eine vorteilhafte Maßnahme vor, dass der Compiler in einem Szenario, bei dem die erste Firewallregel einen ersten Adressbereich definiert und die zweite Firewallregel einen zweiten Adressbereich definiert und dem ersten und dem zweiten Adressbereich dieselbe erste Handlungsanweisung für die Firewall-Einrichtung zugeordnet ist, also beispielsweise eine Weiterleitung zu einem Weiterleiten oder eine Blockierungsanweisung zu einem Blockieren von Nachrichten ist, die eine Adresse des ersten Adressbereichs oder des zweiten Adressbereichs aufweisen, der Compiler einen dritten Adressbereich zur Bildung der dritten Firewallregeln ermittelt oder zu einer solchen Ermittlung ausgestaltet ist, wobei der dritte Adressbereich außerhalb oder zwischen dem ersten Adressbereich und dem zweiten Adressbereich liegt. Weiterhin ordnet der Compiler dieser dritten Firewallregel als dritte Handlungsanweisung eine Inversion der ersten Handlungsanweisung zu oder ist zu einer derartigen Zuordnung ausgestaltet, wobei die dritte Handlungsanweisung eine Blockierungsanweisung ist, wenn die erste Handlungsanweisung eine Weiterleitungsanweisung ist oder eine Weiterleitungsanweisung ist, wenn die erste Handlungsanweisung eine Blockierungsanweisung ist. Mithin wandelt also der Compiler eine Weiterleitungsanweisung in eine Blockierungsanweisung und eine Blockierungsanweisung in eine Weiterleitungsanweisung um, wenn er bei der Bildung der dritten Firewallregel den dritten Adressbereich definiert, der den ersten und den zweiten Adressbereich sozusagen ausschließt und alle anderen Adressen außerhalb dieses Adressbereiches benennt. Beispielsweise kann eine derartige Ermittlung des dritten Adressbereichs ein Subtrahieren des ersten Adressbereichs vom zweiten Adressbereich oder des zweiten Adressbereichs vom ersten Adressbereich sein oder jedenfalls eine Differenzbildung zwischen dem ersten und dem zweiten Adressbereich.

Die Firewall-Einrichtung kann in Hardware und/oder in Software oder beidem ausgestaltet sein. Mithin können also die Firewallregeln, die die Generatorvorrichtung erzeugt, zu einer Filtersoftware zusammengefasst werden oder eine Filtersoftware der Firewall-Einrichtung kann damit konfiguriert werden. Es ist aber auch möglich, dass eine Filterhardware vorhanden ist, die anhand der Firewallregeln, beispielsweise der Quell-Firewallregeln und/oder der Ziel-Firewallregeln, konfigurierbar ist. Ohne weiteres ist eine Filterhardware regelmäßig sehr effektiv und schnell, jedoch wenig flexibel. Demgegenüber ist eine Filtersoftware in sehr freiem Umfang programmierbar, braucht jedoch Prozessorressourcen, wenn sie ausgeführt wird. Gerade in einem solchen Szenario ist die nachfolgende Maßnahme vorteilhaft.

Eine vorteilhafte Variante der Erfindung sieht vor, dass die Firewall-Einrichtung zu einer Anwendung von Filterkriterien der Firewallregeln, also der Quell-Firewallregel und/oder der Ziel-Firewallregeln, auf Nachrichten der Funktionseinheiten eine durch einen Prozessor des Kommunikationsknotens ausführbare Filtersoftware zur Ausführung von Software-Firewallregeln und eine mit Hardware-Firewallregeln konfigurierbare Filterhardware aufweist, wobei die Hardware-Firewallregeln, die anhand der Filterhardware definierbar sind oder deren Definition durch die Filterhardware möglich ist, einen vorbestimmten Umfang aufweisen. Die Funktionseinheiten senden einander bei einem realen oder simulierten Datenverkehr (Kombinationen sind möglich) Nachrichten über den Kommunikationsknoten. Eine solche Simulation findet beispielsweise bei der Entwicklung des Kommunikationsnetzwerks oder des Kraftfahrzeugs statt. Auch ein realer Datenverkehr kann beispielsweise im Rahmen einer Entwicklung des Kommunikationsnetzwerks, beispielsweise auch eine Entwicklung des Kraftfahrzeugs, durchgeführt werden. Dann ist vorteilhaft vorgesehen, dass ein Zuweisungsmittel der Generatorvorrichtung zur Zuordnung von Häufigkeitswerten betreffend Häufigkeiten, mit der eine jeweilige Firewallregel oder deren Bestandteile zur Überprüfung von Nachrichten bei dem Datenverkehr angewendet wird, zu der Firewallregel oder deren Bestandteilen ausgestaltet ist oder ein Verfahren eine dementsprechende Zuordnung vorsieht. Weiterhin ist die Generatorvorrichtung zur Bildung der Hardware-Firewallregeln anhand derjenigen Firewallregeln oder deren Bestandteile, die die größten Häufigkeitswerte aufweisen, im Umfang der verfügbaren Handware-Firewallregeln vorteilhaft ausgestaltet oder sieht das Verfahren eine derartige Bildung vorteilhaft vor. Die Generatorvorrichtung ist weiterhin vorzugsweise zur Bildung von Software-Firewallregeln für Firewallregeln oder deren Bestandteile, die nicht in den Hardware-Firewallregeln abgebildet sind, ausgestaltet. Somit bildet also die Generatorvorrichtung aus denjenigen Firewallregeln, die besonders häufig benutzt werden, Hardware-Firewallregeln, während die restlichen Firewallregeln, die nicht in Hardware-Firewallregeln umgesetzt sind oder abgebildet sind, als Software-Firewallregeln bereitgestellt werden.

Vorzugsweise dient die Simulation des Datenverkehrs vor Inbetriebnahme der Firewall der Erfassung von möglichst repräsentativem Referenz-Datenverkehr, der den erwarteten Datenverkehr im späteren Betrieb nachbildet.

Die Filterhardware ist zu einer sehr schnellen Prüfung von Nachrichten anhand der Hardware-Firewallregeln ausgestaltet. Allerdings ist die Filtersoftware regelmäßig wenig flexibel. Beispielsweise ist auch eine Prüftiefe, d. h. ein Umfang von Firewallregeln, die bei einer Nachricht möglich ist, bei einer Hardware-Firewallregel begrenzt. So können beispielsweise nur bestimmte oder begrenzte Adressbereiche einer Nachricht durch eine Hardware-Firewallregel überprüfbar sein, beispielsweise weil ein Speicher-Eintrag zur Aufnahme einer Hardware-Firewallregel eine begrenzte Länge aufweist. Demgegenüber ist Filtersoftware wesentlich flexibler. Allerdings werden zur Ausführung der Filtersoftware durch den Prozessor der des Kommunikationsknotens Ressourcen benötigt, die anderweitig nicht einsetzbar sind.

Vorteilhaft ist ein Verfahren zur Zuordnung von Firewall-Regeln für die Firewall-Einrichtung des Kommunikationsknotens des Kommunikationsnetzwerks des Kraftfahrzeugs vorgesehen, wobei die Firewall-Einrichtung zur Überprüfung von Nachrichten, die der Kommunikationsknoten zwischen mit ihm verbundenen Steuergeräten übermitteln soll, anhand der Firewallregeln vorgesehen und ausgestaltet ist, wobei die Firewall-Einrichtung zur Anwendung von Filterkriterien der Firewall-regeln auf Nachrichten der Funktionseinheiten eine durch einen Prozessor des Kommunikationsknotens ausführbare Filtersoftware zur Ausführung von Software-Firewallregeln und eine mit Hardware-Firewallregeln konfigurierbare Filterhardware aufweist, wobei die anhand der Filterhardware definierbaren Hardware-Firewallregeln einen vorbestimmten Umfang aufweisen, wobei die Funktionseinheiten einander bei einem realen oder simulierten Datenverkehr Nachrichten über den Kommunikationsknoten senden.

Vorteilhaft sieht das Verfahren zur Zuordnung von Firewall-Regeln für die Firewall-Einrichtung vor:
- Zuordnung von Häufigkeitswerten betreffend Häufigkeiten, mit der eine jeweilige Firewallregel oder deren Bestandteile zur Überprüfung von Nachrichten bei dem Datenverkehr angewendet wird, zu der jeweiligen Firewallregel oder deren Bestandteile durch ein Zuweisungsmittel einer Generatorvorrichtung,
- Bildung der Hardware-Firewallregeln anhand derjenigen Firewallregeln oder deren Bestandteile, die die größten Häufigkeitswerte aufweisen, im Umfang der verfügbaren Hardware-Firewallregeln durch die Generatorvorrichtung und
- Bildung von Software-Firewallregeln für Firewallregeln oder deren Bestandteile, die nicht in den Hardware-Firewallregeln abgebildet sind, durch die Generatorvorrichtung.

Der reale Datenverkehr kann beispielsweise anhand einer Monitor-Software oder einem sogenannten Datenlogger überwacht werden, um die Häufigkeitswerte zu ermitteln. Ein simulierter Datenverkehr kann durch eine Software-Simulation stattfinden, wobei unterschiedliche Genauigkeiten möglich sind. So kann beispielsweise eine fertig entwickelte Software auf den Steuergeräten und den Kommunikationsknotens eingesetzt werden, um einen möglichst realitätsnahen Datenverkehr zu simulieren. Es ist aber auch möglich, dass eine statistische Simulation durchgeführt wird, d. h. dass beispielsweise typische statistische Werte, mit denen Nachrichten gesendet werden, als simulierte Häufigkeitswerte der weiteren Auswertung zugrunde liegen.

Die Filterhardware kann beispielsweise ein sogenannter TCAM-Filter sein (TCAM = Ternary Content Addressable Memory). Aber auch beispielsweise ein FPGA (Field Programmable Gate Array) oder eine sonstige programmierbare Hardware kann als Filterhardware vorgesehen sein.

Der Umfang der verfügbaren Hardware-Firewallregeln ist beispielsweise durch die Anzahl der verfügbaren Hardware-Firewallregeln definiert. Es ist aber auch möglich, dass zur Umsetzung einer einzigen Firewallregel mehrere Hardware-Firewallregeln notwendig sind, die beispielsweise nacheinander oder gemeinsam auf die jeweilige Nachricht angewendet werden. So können beispielsweise mit einer ersten Hardware-Firewallregel ein erster Teil eines Adressbereichs einer Nachricht und mit einer zweiten Hardware-Firewallregel ein zweiter Teil des Adressbereichs der Nachricht überprüfbar sein. Mithin ist also der Begriff "Umfang der Hardware-Firewallregeln" dahingehend zu verstehen, dass damit die Kapazität oder Leistungsfähigkeit der Filterhardware beschrieben ist oder definiert ist".

Das erfindungsgemäße Verfahren sowie die Generatorvorrichtung eignet sich also zur Konfiguration der Filterhardware und zur Bereitstellung von Software-Firewallregeln, anhand derer die Filtersoftware konfigurierbar ist oder erstellbar ist. Mithin können also die Filtersoftware Firewallregeln abbilden oder verkörpern, d. h. dass die Software-Firewallregeln durch den Prozessor des Kommunikationsknotens ausführbare Programme enthalten oder sind. Es ist aber auch möglich, dass eine dynamisch konfigurierbare Filtersoftware vorhanden ist, die anhand der Software-Firewallregeln konfigurierbar ist.

Bei den Firewallregeln, die die Generatorvorrichtung als Hardware-Firewallregel oder Software-Firewallregel definiert, kann es sich beispielsweise um Quell-Firewallregeln handeln, die von Quell-Funktionseinheiten gesendete Nachrichten betreffen. Beispielsweise können die Quell-Firewallregeln die als Filterkriterien die Adressen oder Adressbereiche der Quell-Funktionseinheiten enthalten.

Eine jeweilige Firewallregel kann beispielsweise eine Blockierungsanweisung enthalten, so dass eine Nachricht, die den Filterkriterien entspricht, blockiert wird, oder eine Weiterleitungsanweisung, so dass eine Nachricht, die den Filterkriterien, beispielsweise Adressbereichen der Firewallregel entspricht, weitergeleitet wird.

Mithin können also die Firewallregeln Adress-Filterkriterien enthalten, zum Beispiel die Adresse eines Steuergerätes, welche die Funktionseinheit enthält oder ausführt, eines Ports des Steuergerätes, an welches die Funktionseinheit angeschlossen ist, die Adresse eines Anschlusses des Kommunikationsknotens, über den das Steuergerät mit der Funktionseinheit kommuniziert etc.. Weiterhin kann das Adress-Filterkriterium auch beispielsweise eine Adresse der Funktionseinheit, beispielsweise einen Identifizierer der Funktionseinheit, umfassen.

Eine Firewallregel kann auch eine Ziel-Firewallregel umfassen oder sein, d. h. dass das beispielsweise eine Adresse einer Ziel-Funktionseinheit das Adress-Filterkriterium der Firewallregel bildet. Ohne weiteres ist möglich, dass eine Firewallregel eine Quell-Firewallregel und eine Ziel-Firewallregel enthält, d. h. dass beispielsweise die Adressen gemäß der Firewallregel sendenden Funktionseinheit und der gemäß der Firewallregel empfangenden Funktionseinheit in den Adress-Filterkriterien der Firewallregel abgebildet sind.

Man erkennt also, dass die Firewallregeln einen großen Umfang aufweisen können, so dass es vorteilhaft ist, vor der Zuordnung der Firewallregeln zu der Filtersoftware und der Filterhardware eine Optimierung durchzuführen und beispielsweise redundante Firewallregeln auszusondern. Nachfolgend werden einige Optimierungen vorgestellt, die vorteilhaft anwendbar sind.

Vorteilhaft ist bei dem Verfahren eine Ermittlung mindestens eines identischen Adress-Filterkriteriums, das in zumindest zwei Firewallregeln als Bestandteil enthalten ist, durch die Generatorvorrichtung vorgesehen oder ist die Generatorvorrichtung zu einer derartigen Ermittlung ausgestaltet. Dabei ist vorgesehen, dass die Firewall-Einrichtung bei einer Anwendung des identischen Adress-Filterkriteriums zur Überprüfung einer Nachricht dann, wenn die Nachricht dem Adress-Filterkriterium entspricht, man die übrigen Filterkriterien mindestens einer der mindestens zwei Firewallregeln zur Überprüfung der Nachricht anwendet. Dies bedeutet beispielsweise, dass die Generatorvorrichtung ansonsten bei jeder Firewallregel sämtliche Filterkriterien, wenn sie jede Firewallregel separat prüfen würde. In beiden Firewallregeln ist nämlich dasselbe Adress-Filterkriterium enthalten, so dass die Firewall-Einrichtung bei Überprüfung anhand dieses identischen Adress-Filterkriteriums jeweils die Firewallregel weiterprüfen würde, ob die weiteren Filterkriterien dieser Firewallregel von der Nachricht erfüllt sind oder nicht.

Man kann sich das beispielsweise auch so vorstellen, dass auf diesem Wege eine Art Präfixbaum oder logischer Präfixbaum entsteht, d. h. dass das identische Adress-Filterkriterium oder ein identisches Adress-Filterkriterium zu einer Verzweigung führt dahingehend, dass von diesem abhängend die weiteren Filterkriterien der Firewallregeln, die dasselbe Adress-Filterkriterium aufweisen, aufgezeigt werden. Selbstverständlich kann jedes dieser weiteren Filterkriterien weitere gemeinsame Filterkriterien zweier Firewallregeln umfassen, was dann zu einer weiteren Verzweigung oder Unter-Verzweigung führt. Somit entsteht also eine Art Prüfbaum oder Prüfbaum-Struktur, die die Zuordnung von Häufigkeitswerten erreicht wird und optimiert. So kann beispielsweise die Überprüfung einer IP-Adresse eines Steuergeräts recht häufig vorkommen und im Zusammenhang mit sämtlichen Funktionseinheiten, die dem Steuergerät zugeordnet sind, überprüft werden. Die IP-Adresse bildet also beispielsweise ein Adress-Filterkriterium, welches bei sämtlichen Firewallregeln, die Funktionseinheiten dieses Steuergeräts zugeordnet sind, zu überprüfen ist.

Vorteilhaft ist eine Bildung einer logischen Baumstruktur durch die Generatorvorrichtung ausgehend von einer ersten Firewallregel und mindestens einer zweiten Firewallregel vorgesehen, wobei ein identisches Adress-Filterkriterium der ersten Firewallregel und der mindestens einen zweiten Firewallregel als ein Knotenpunkt definiert ist, von dem die übrigen Filterkriterien der ersten Firewallregel und der mindestens einen zweiten Firewallregel als logische Zweige abhängen. Die logische Baumstruktur ist dabei als eine mögliche grafische Repräsentanz dieses vorteilhaften Vorgehens zu verstehen. Mithin muss also die logische Baumstruktur nicht in Form einer Abbildung bestehen, sondern kann in Software verkörpert sein bzw. eine entsprechende Ordnung und Strukturierung der Firewallregeln darstellen. Somit bildet also die logische Baumstruktur eine optimierte Prüfung dahingehend ab, dass ein identisches Adresskriterium möglichst wenig oft geprüft werden muss, weil nämlich nach dieser Prüfung bereits die weiteren Filterkriterien der den gemeinsamen "Knotenpunkte" oder das gemeinsame Adress-Filterkriterium aufweisenden Firewallregeln geprüft werden. In den von Knotenpunkten abhängenden Zweigen sind andere Prüfungen vorgesehen, die sich an die abgeschlossene Prüfung, die im Zusammenhang mit dem Knotenpunkt steht, anschließen können. Die Häufigkeitswerte der Prüfungen nehmen entsprechend ab, d. h. die Filterkriterien können optimal zugeordnet und eingestellt werden.

Vorteilhaft ist also beispielsweise vorgesehen, dass ein Häufigkeitswert, mit dem das identische Adress-Filterkriterium geprüft wird, durch die Generatorvorrichtung ermittelt und zugeordnet wird und dieser Häufigkeitswert dann dem identischen Adress-Filterkriterium, bei der logischen Baumstruktur also dem Knotenpunkt, zugeordnet wird. Weiterhin ist die Generatorvorrichtung dazu vorgesehen und ausgestaltet bzw. sieht das Verfahren vor:
Ermittlung der Hardware-Firewallregeln und Software-Firewallregeln in Abhängigkeit von dem den identischen Adress-Filterkriterium zugeordneten Häufigkeitswert. Selbstverständlich erfolgt eine derartige Ermittlung und Zuordnung vorteilhaft bei mehreren oder jedem Knotenpunkt oder identischen Adress-Filterkriterium, so dass die Optimierung iterativ oder mehrfach durchgeführt wird.

Das Verfahren sieht vorteilhaft ein Sortieren der Firewallregeln in Bezug auf Adress-Filterkriterien, die in den Firewallregeln enthalten sind, durch die Generatorvorrichtung vor. Die Generatorvorrichtung legt dabei eine Reihenfolge der Firewallregeln so fest, dass eine Anwendung einer höherrangigen Firewallregel die Anwendung einer Firewallregel mit niedrigem Rang nicht grundsätzlich verhindert oder verhindern würde. Mithin darf also eine niederrangige Firewallregel nicht durch eine höherrangige Firewallregel überschattet werden. Somit wird sichergestellt, dass eine vollständige Überprüfung im Hinblick auf sämtliche Firewallregeln von der Firewall-Einrichtung durchgeführt wird, wenn es nötig ist.

Die Nachrichten weisen Adressdaten vorteilhaft in einer hierarchischen Struktur auf. Beispielsweise kann eine hierarchische Struktur vorsehen sein, dass zunächst die Adresse eines Steuergeräts, dann die Adresse eines Ports, den eine Funktionseinheit nutzt, und anschließend die Adresse der Funktionseinheit hierarchisch angegeben sind.

Vorteilhaft ist ein Sortieren der Firewallregel gemäß der hierarchischen Struktur der Adress-Filterkriterien derart vorgesehen, dass im Rahmen einer Überprüfung einer Nachricht nach der einmaligen Anwendung eines höherrangigen Adress-Filterkriteriums, dass in mindestens zwei Firewallregeln enthalten ist, auf die Nachricht nur noch die weiteren Adress-Filterkriterien der mindestens zwei Firewallregeln durch die Firewall-Einrichtung auf die Nachricht anzuwenden sind, falls die Nachricht dem höherrangigen Adress-Filterkriterium genügt. Die weiteren Adress-Filterkriterien haben beispielsweise einen niedrigeren Rang. Das höherrangige Adress-Filterkriterium ist also beispielsweise das in Zusammenhang mit der Baumstruktur erwähnte identische Adress-Filterkriterium, welches einen Knotenpunkt oder einen gedanklichen Knotenpunkt in der Baumstruktur darstellt.

Vorteilhaft ist bei dem Verfahren eine Erstellung mindestens einer Software-Firewallregel durch Zuordnen einer Software-Prüfroutine zu einem jeweiligen Adressbereich der zu überprüfenden Nachricht vorgesehen, wobei jede Software-Prüfroutine eine Startadresse aufweist, über die die Software-Prüfroutine für den Prozessor des Kommunikationsknotens oder der Firewall-Einrichtung des Kommunikationsknotens auswählbar ist. Die Software-Prüfroutinen, die nicht sozusagen am Ende der Softwareprüfung stehen, also nicht finale Software-Prüfroutinen sind, weisen Sprunganweisungen zu einer jeweils nächsten Software-Prüfroutine auf, die von ihrem jeweiligen Prüfergebnis abhängig sind. So kann beispielsweise die vorgenannte logische Baumstruktur in den entsprechenden Sprunganweisungen abgebildet sein. Beispielsweise springt eine Software-Prüfroutine, die die Überprüfung einer IP-Adresse des Steuergeräts zur Aufgabe hat, in einem nächsten Schritt in Abhängigkeit von ihrem Prüfergebnis zu einer Überprüfung eines ersten Ports des Steuergeräts oder eines zweiten Ports des Steuergeräts, wobei jedem Port wieder eine eigene Software-Prüfroutine zugeordnet ist. Somit wird also einmal die eine, einem ersten Port zugeordnete Software-Prüfroutine und einmal eine andere, zweite Software-Prüfroutine angesprungen, die den zweiten Port des Steuergeräts zugeordnet ist. Die Software-Firewallregeln oder die Software-Prüfroutinen können beispielsweise die Filtersoftware bilden oder zumindest einen Teil der Filtersoftware bilden.

Es ist möglich, dass eine Hardware-Firewallregel eine vollständige Überprüfung einer Nachricht ermöglicht. Mithin kann also die Filterhardware eine anhand einer Hardware-Firewallregel geprüfte Nachricht zur Weiterleitung freigeben oder deren Weiterleitung blockieren, abhängig von der in der Hardware-Firewallregel angegebenen Handlungsanweisung für die Firewall-Einrichtung. Es ist aber auch möglich, dass Software-Firewallregeln und Hardware-Firewallregeln miteinander verbunden oder verknüpft sind.

Möglich ist der Fall, dass eine Software-Firewallregel auf eine Hardware-Firewallregel zu einer weiteren Überprüfung einer Nachricht verweist. Eine derartige Ausführungsform ist also ohne weiteres im Rahmen der Erfindung umsetzbar, stellt also eine vorteilhafte Variante dar. Sie ist beispielsweise dann sinnvoll, wenn eine Software-Firewallregel eine zunächst komplexe Überprüfung einer Nachricht ermöglicht, wobei dann nachgeschaltete, häufiger vorkommende und/oder einfachere Überprüfungen anhand der Filterhardware realisiert werden.

Ein bevorzugtes Konzept sieht jedoch eine Überprüfung einer Nachricht anhand zunächst der Filterhardware und anschließend der Filtersoftware vor, so dass beispielsweise eine schnelle, häufig vorkommende Überprüfung oder ein häufig vorkommendes Überprüfungskriterium, sehr effektiv und schnell in der Filterhardware umgesetzt werden kann.

Beispielsweise ist bei dem Verfahren vorteilhaft vorgesehen: Zuweisen einer Software-Firewallregel zu einer Hardware-Firewallregel bezüglich zur Überprüfung der Daten einer Nachricht, wenn die Daten durch die Hardware-Firewallregel nicht geprüft werden oder nicht geprüft werden können, wobei die Generatorvorrichtung in die Hardware-Firewallregel einen Verweis auf die Software-Firewallregel beispielsweise für die Filtersoftware, einfügt. Somit kann also beispielsweise am Ausgang der Filterhardware der Verweis in Richtung der Filtersoftware bzw. der konkreten Software-Firewallregel stehen. Beispielsweise kann der Verweis auf die eine Startadresse einer der vorher erläuterten Software-Prüfroutinen zeigen.

Wie bereits erläutert, ist es möglich, dass das eine Firewallregel ganz oder teilweise in einer Hardware-Firewallregel oder einer Software-Firewallregel abgebildet werden kann. Aber auch die Aufteilung von einzelnen Prüfungen auf die Filtersoftware und die Filterhardware ist vorteilhaft, d. h. beispielsweise für Teil-Prüfungen, die eine Firewallregel vorsieht, eine Hardware-Firewallregel definiert wird und für andere Teil-Prüfungen eine Software-Firewallregel.

So sieht eine vorteilhafte Ausgestaltung eine Bildung einer Hardware-Firewallregel für einen Bestandteil einer ersten Firewallregel und Bildung einer Software-Firewallregel für einen Bestandteil an einer zweiten Firewallregel durch die Generatorvorrichtung vor, wenn der Bestandteil der ersten Firewallregel einen größeren Häufigkeitswert aufweist als der Bestandteil der zweiten Firewallregel. Mithin ist also der Bestandteil der ersten Firewallregel häufiger bei der Prüfung von Nachrichten durch die Firewall-Einrichtung anzuwenden als der Bestandteil der zweiten Firewallregel. Die Zuordnung zu der Filtersoftware für den wenig häufig auftretenden Bestandteil einer Firewallregel optimiert also die Geschwindigkeit der Software-Einrichtung bei der Prüfung von Nachrichten.

Der Bestandteil der ersten Firewallregel und der Bestandteil der zweiten Firewallregel können beispielsweise hierarchisch gleich sein. Beispielsweise können beide Bestandteile jeweils eine IP-Adresse betreffen. Es ist aber auch möglich, dass der Bestandteil der ersten Firewallregel hierarchisch höher als der Bestandteil der zweiten Firewallregel ist. Beispielsweise kann eine Prüfung der IP-Adresse den Bestandteil der ersten Firewallregel bilden, während bei der zweiten Firewallregel der Bestandteil eine Überprüfung des Ports, beispielsweise eines UDP-Ports, ist.

Ein vorteilhaftes Konzept sieht ein Optimieren der Firewallregel vor der zukünftigen Zuordnung der Häufigkeitswerte zu den Firewallregeln oder deren Bestandteilen durch Zusammenfassung einer ersten Firewallregel und mindestens einer zweiten Firewallregel zu einer dritten Firewallregel vor, wenn deren Handlungsanweisungen, z. B. eine Nachricht zu blockieren oder weiterzuleiten, identisch sind. Somit werden optimierte und somit in ihrem Umfang gekürzte oder sozusagen kondensierte Firewallregeln der Zuordnung der Häufigkeitswerte zugrunde gelegt, so dass eine optimierte Zuordnung zu der Filtersoftware und Filterhardware möglich ist.

Weiterhin ist vorteilhaft eine Optimierung der Hardware-Firewallregel und/oder der Software-Firewallregeln vorteilhaft, wenn bereits die Zuordnung zu Filtersoftware und Filterhardware stattgefunden hat. Dadurch können beispielsweise die Umfänge oder die Anzahl der jeweiligen Hardware-Firewallregeln oder Software-Firewallregeln reduziert werden.

Insbesondere vorteilhaft ist es, wenn die Hardware-Firewallregeln derart optimiert werden, dass sozusagen weitere Ressourcen der Filterhardware frei werden, in dem eine Hardware-Firewallregeln oder mehrere Hardware-Firewallregeln eingespart werden. Dann ist es möglich, eine oder mehrere Software-Firewallregeln in Hardware-Firewallregeln abzubilden, d. h. der Umfang der Software-Firewallregeln wird reduziert, indem die Effizienz der Hardware-Firewallregeln gesteigert wird.

So sieht eine vorteilhafte Ausführungsform beispielsweise eine Bildung einer dritten Hardware-Firewallregel anhand einer ersten Hardware-Firewallregel und einer zweiten Hardware-Firewallregel vor, wobei die dritte Hardware-Firewallregel die Filterkriterien der ersten und der zweiten Hardware-Firewallregel zusammenfasst. Dann sieht diese Maßnahme auch noch ein Ersetzen der ersten Hardware-Firewallregel die durch die dritte Hardware-Firewallregel und Bildung einer neuen, zweiten Hardware-Firewallregel anstelle einer Software-Firewallregel vor, wobei die neue zweite Hardware-Firewallregel die Software-Firewallregel ganz oder teilweise repräsentiert. Die Anzahl der Software-Firewallregeln kann dadurch reduziert werden.

Hardware-Firewallregeln können beispielsweise binäre Hardware-Firewallregeln sein. Die erste Hardware-Firewallregel und die zweite Hardware-Firewallregel enthalten beispielsweise dieselbe Handlungsanweisung und ihre zu einer Überprüfung anzuwendenden Filterkriterien unterscheiden sich nur an einer BIT-Stelle. Die Handlungsanweisung kann beispielsweise eine Weiterleitungsanweisung zu einem Weiterleiten oder einer Blockierungsanweisung zu einem Blockieren von Nachrichten sein. Die Generatorvorrichtung bildet die dritte, zusammenfassende Hardware-Firewallregel, z.B. durch eine Maskierung der BIT-Stelle. Der Hardware-Filter bzw. die Hardware-Firewallregel kann also an dieser BIT-Stelle beide Werte zulassen, die von der ersten und von der zweiten Hardware-Firewallregel repräsentiert werden.

Nachfolgend werden Ausführungsbeispiele der Erfindung anhand der Zeichnung erläutert. Es zeigen:
- Figur 1: eine schematische Darstellung eines Kommunikationsnetzwerkes eines Kraftfahrzeugs,
- Figur 2: eine Generatorvorrichtung zur Ermittlung von Firewallregeln in schematische Darstellung,
- Figur 3: ein schematisches Ablaufdiagramm für eine Firewall des Kommunikationsknotens gemäß Figur 1,
- Figur 4: eine Funktion eines Analysemittels der Generatorvorrichtung gemäß Figur 2 zur Analyse des Kommunikationsnetzwerks gemäß Figur 1,
- Figur 5: eine Funktion des Analysemittels der Generatorvorrichtung gemäß Figur 1 zur Erzeugung einer Firewallregel,
- Figur 6: eine tabellarische Auflistung von gemäß dem Verfahren nach Figur 5 erzeugten Firewallregeln,
- Figur 7: eine Liste optimierter Firewallregeln in tabellarischer Ansicht,
- Figur 8: eine Tabelle mit Firewallregeln,
- Figur 9: eine weitere Tabelle mit Firewallregeln, die durch Optimierung der Firewallregeln gemäß Figur 8 erzeugt sind,
- Figur 10: eine baumartige Darstellung von Firewallregeln, und
- Figur 11: eine schematische Darstellung einer Hardware-Firewallregel.

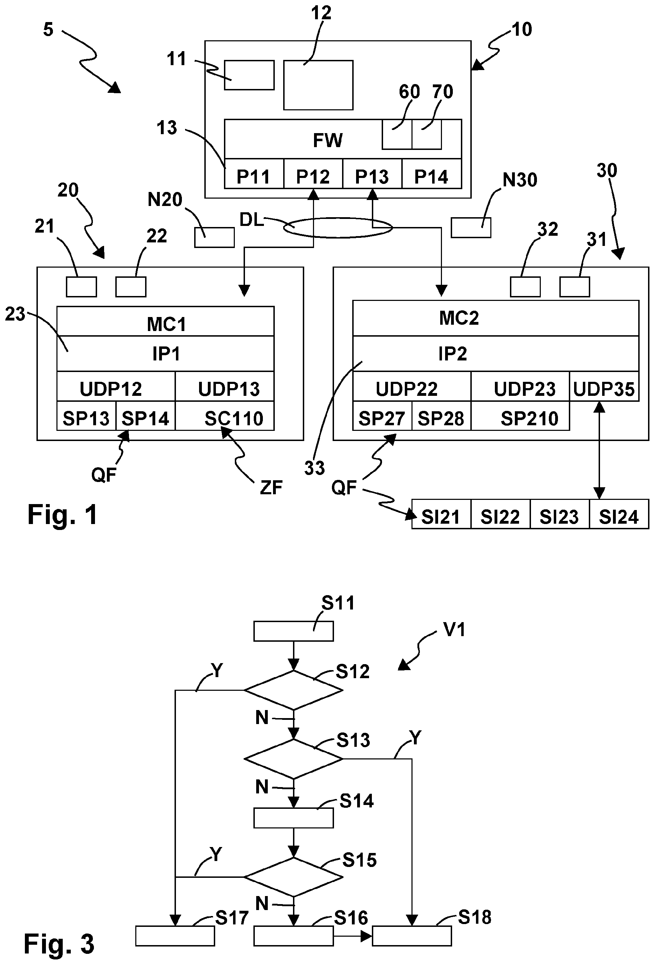

Von einem Kommunikationsnetzwerk 6 an das Kraftfahrzeug 5 sind in Figur 1 exemplarisch ein Kommunikationsknoten 10 sowie an diesen angeschlossene und mit diesem verbundene Steuergeräte 20 und 30 dargestellt. Der Kommunikationsknoten 10 ist beispielsweise ein Switch, der zur Weiterleitung von IP-Nachrichten vorgesehen und ausgestaltet ist, die die Steuergeräte 20 und 30 versenden und empfangen, wovon beispielhaft Nachrichten N20 und N30, die über Kommunikationsschnittstellen 22 und 33 der Steuergeräte 20 und 30 gesendet und empfangen werden. Die Kommunikationsschnittstellen 23 und 33 sind an eine Kommunikationsschnittstelle 13 des Kommunikationsknotens 10 angeschlossen. Beispielsweise sind die Kommunikationsschnittstellen 13, 23 und 33 Ethernet-Schnittstellen, deren Aufbau nachfolgend erläutert wird.

Die Kommunikationsschnittstelle 13 weist eine Firewall FW auf, um Nachrichten, die von dem Steuergerät 20 an das Steuergerät 30 gesendet werden und umgekehrt vom Steuergerät 30 an das Steuergerät 20 gesendet werden, zu überprüfen, so dass eventuell in das Kommunikationsnetzwerk 6 eingeschleuste Nachrichten vom Kommunikationsknoten 10 ausgefiltert werden können. Somit ist ein Angriff auf beispielsweise die Software der Steuergeräte 20 und 30, mit der beispielsweise Fehlfunktionen, auch sicherheitsrelevante Fehlfunktionen, bewirkt werden könnten, ausgeschlossen.

Allerdings ist die Konfiguration einer solchen Firewall FW umständlich, insbesondere dann, wenn anders als beim sehr vereinfachten Ausführungsbeispiel gemäß Figur 1 eine Vielzahl von Steuergeräten mit einer Vielzahl von Funktionseinheiten, die nachfolgend erläutert werden, über das Kommunikationsnetzwerk 6 miteinander kommunizieren. Dabei ist es möglich, dass nicht nur der Kommunikationsknoten 10, sondern weitere Kommunikationsknoten mit vorzugsweise ebenfalls weiteren Firewalls beteiligt sind, was die Konfiguration der verschiedenen Firewalls an den Kommunikationsknoten zusätzlich erschwert.

Die Prozessoren 21 und 31 sind zur Ausführung von Software ausgestaltet, beispielsweise um Dienste oder Dienstfunktionen bereitzustellen oder auch Signale bereitzustellen.

Beispielsweise weist das Steuergerät 20 Dienste oder Dienstanbieter SP13 und SP14 auf, die Dienste für andere an das Kommunikationsnetzwerk 6 angeschlossene Funktionseinheiten bereitstellen. Beispielsweise weist das Steuergerät 20 auch einen Dienstnutzer SC110auf, der Informationen anderer Dienste nutzt. Die Dienstanbieter SP13 und SP14 sind Quell-Funktionseinheiten QF. Der Dienstnutzer SC110 ist eine Ziel-Funktionseinheit ZF.

Beim Steuergerät 30 hingegen sind zwei Dienstanbieter SP27 und SP28 als Quell-Funktionseinheiten QF vorgesehen, sowie eine weitere Quell-Funktionseinheit QF in Gestalt eines Dienstanbieters SP210. Signalgeneratoren S121, S122, S123, SI24 stellen Signale bereit, die das Steuergerät 30 anhand der Nachrichten N30 an andere Kommunikationsteilnehmer des Kommunikationsnetzwerks 6 übermittelt.

Die Nachrichten N20 und N30 sind nach dem Internetprotokoll aufgebaut, beispielsweise in der Version 4 (IPV4), wobei andere Versionen des Internetprotokolls oder andere Protokolle ohne weiteres möglich sind. Dementsprechend ist auch der Aufbau der Kommunikationsschnittstellen 13, 23 und 33 ausgestaltet. Beispielsweise sind die Dienstanbieter SP13, SP14 zur Kommunikation über einen Steuergerät-Port UDP12 vorgesehen und der Dienstanbieter SP110 kommuniziert über einen Port UDP13. Beide Ports UDP12, UDP13 sind der Adresse des Steuergeräts 20 zugeordnet, beispielsweise der IP-Adresse IP1. Das Steuergerät 20 weist weiterhin eine MAC-Adresse MC1 auf.

Die Dienstanbieter SP27, SP28 kommunizieren über einen Port UDP22, der Dienstanbieter SP210 über einen Port UDP23 und die Signalgeneratoren SI21-SI24 senden ihre Signale über einen Port UDP35 des Steuergeräts 30. Das Steuergerät 20 weist zumindest in Bezug auf seine Kommunikationsschnittstelle 33 die Steuergerät-Adresse oder IP-Adresse IP2 auf. Das Steuergerät 30 weist weiterhin eine MAC-Adresse MC2 auf.

Eine weitere Zuordnungssicherheit ergibt sich im Kommunikationsnetz 6 auch dadurch, dass die Steuergeräte 20 und 30 an vordefinierte physikalische Anschlüsse P12 und P13 des Kommunikationsknotens 10 angeschlossen sind. An die weiteren physikalischen Anschlüsse P11 und P14 des Kommunikationsknotens 6 können andere, in der Zeichnung nicht dargestellte Steuergeräte oder evtl. auch andere Kommunikationsknoten angeschlossen werden oder sein.

Die Ermittlung von Firewallregeln FR für die Firewall-Einrichtung FW wird durch eine Generatorvorrichtung GV geleistet.

Die Generatorvorrichtung GV analysiert dazu Kommunikationsbeziehungsdaten KDB, die beispielsweise in einer in der Zeichnung nicht dargestellten Datenbank gespeichert sind. Die Kommunikationsbeziehungsdaten KDB erläutern beispielsweise Kommunikationsbeziehungen KD1, KD2, ... KDX, die Kommunikationsbeziehungen zwischen den Quell-Funktionseinheiten QF und den Ziel-Funktionseinheiten ZF darstellen. Beispielsweise umfassen die Kommunikationsbeziehungsdaten KDB Daten zu den einzelnen Kommunikationsbeziehungen zwischen den Funktionseinheiten QF und ZF. Beispielsweise beschreiben die Kommunikationsbeziehungen KD1 und KD2 die Kommunikationsbeziehungen zwischen den Dienstanbietern SP27 und SP28 einerseits und dem Dienstnutzer SC110 andererseits. Dies ist nur exemplarisch zu verstehen.

Des Weiteren umfassen die Kommunikationsbeziehungsdaten KDB auch vorteilhaft Kommunikationsnetzwerkdaten KDN, die eine Topologie oder einen physikalischen Aufbau des Kommunikationsnetzwerks 6 beschreiben.

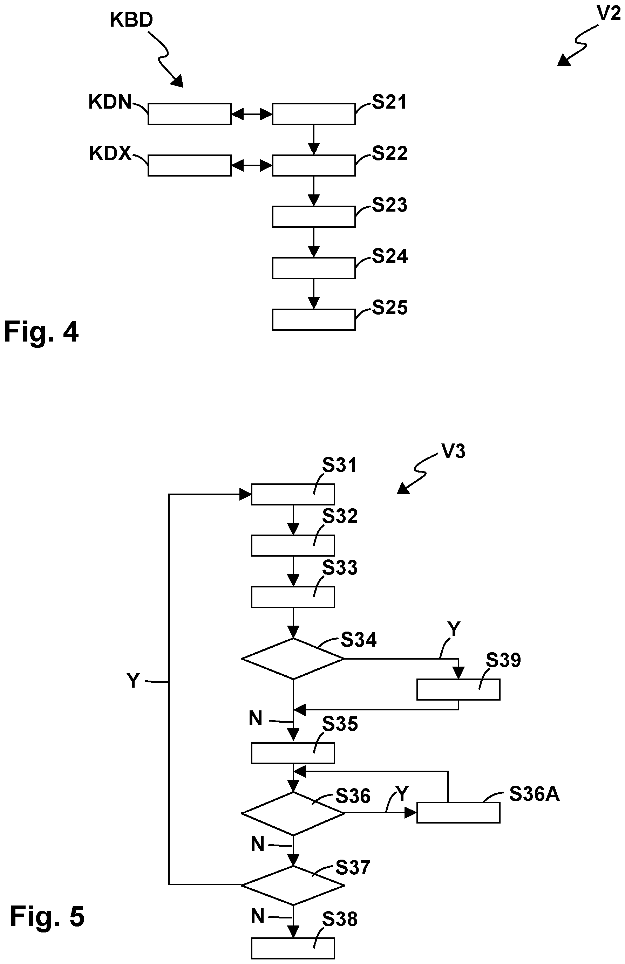

Beispielsweise führt ein Analysemittel AM der Generatorvorrichtung GV ein Verfahren V2 gemäß Figur 4 durch, um grundsätzlich die Firewallregeln FR zu erstellen.

Das Verfahren V2 sieht beispielsweise in einem Schritt S21 vor, dass das Analysemodul AM die einzelnen Geräte des Kommunikationsnetzwerks 6 ermittelt und dazu die Kommunikationsnetzwerkdaten KDN analysiert.

In einem Schritt S22 ermittelt das Analysemittel AM aus den Kommunikationsbeziehungen KDX, also beispielsweise den Kommunikationsbeziehungen KD1, KD2 etc., die Kommunikation, die zwischen den Geräten oder Netzwerkbestandteilen des Kommunikationsnetzwerks 6 bestehen, beispielsweise eine Kommunikationsbeziehung zwischen dem Dienstanbieter SP13 und einem nicht dargestellten Nutzer dieses Dienstes oder dem Dienstanbieter SP27 und dem Dienstnutzer SC110. Dies geschieht beispielsweise in einem Schritt S23, wenn das Analysemittel AM einen entsprechenden Steuerbefehl dazu erhält. Das Analysemittel AM ist beispielsweise parametrierbar.

In einem Schritt S24 werden beispielsweise die von den Signalgeneratoren ausgehenden Signale bzw. Kommunikationsbeziehungen, die sich aus dem Senden dieser Signale ergeben, analysiert, wenn eine entsprechende Nutzereingabe dies vorsieht.

Selbstverständlich können auch andere, in der Zeichnung nicht dargestellte Kommunikationsbeziehungen zwischen Quell-Funktionseinheiten und Ziel-Funktionseinheiten, die nicht Dienste oder Signalgeneratoren sind, bestehen und beispielsweise in einem der Schritte S23 oder S24 durch das Analysemittel AM ermittelt werden.

In einem Schritt S25, dessen Ausführung vorzugsweise wahlweise auswählbar ist oder parametrierbar ist, fügt das Analysemittel AM beispielsweise noch die Adressen der physikalischen Anschlüsse des Kommunikationsknotens 10 hinzu, also im Ausführungsbeispiel die Adressen der Anschlüsse P12 und P13, so dass durch die Schritte S21-S25 jeweils vollständige Firewall-Regeln ermittelbar sind. In den Schritten S23 und S24 erzeugt nämlich das Analysemittel AM bereits Firewallregeln, wobei es sich um Quell-Firewallregeln handeln kann, die von einer Quell-Funktionseinheit ausgehende Kommunikationsbeziehung treffen und/oder um Ziel-Firewallregeln, die eine Ziel-Funktionseinheit betreffen bzw. die von dieser empfangenen Nachrichten betreffen. In dem Schritt S25 werden also diese Firewall-Regeln noch um die Adressen der physikalischen Anschlüsse des Kommunikationsknotens 10 ergänzt.

Im Rahmen des Verfahrens V2 wird dementsprechend eine sogenannte Whitelist von Firewallregeln erstellt, d.h. von zulässigen Kommunikationen zwischen Funktionseinheiten, die Bestandteile des Kommunikationsnetzwerkes 6 sind.

An dieser Stelle sei noch erwähnt, dass selbstverständlich die Signalgeneratoren und Dienste nur als Beispiele zu verstehen sind, d.h. dass das Kommunikationsnetzwerk 6 selbstverständlich auch andere Kommunikationsteilnehmer des Kraftfahrzeugs 5 umfassen kann, die andersartige Funktionen leisten.

Die Erstellung einer individuellen Firewallregel FR wird nachfolgend anhand des Verfahren V3 gemäß Figur 5 erläutert.

In einem Schritt S31 wählt das Analysemittel AM beispielsweise einen Steuergerät-Port UDP, z. B. für den Steuergerät-Port UDP12, aus. Ein solcher Port bildet einen sogenannten Applikationsendpunkt, d. h. einen Endpunkt in der Kommunikation, der von verschiedenen Applikationen oder die benutzt wird, also im vorliegenden Beispiel von den Funktionseinheiten QF und/oder ZF.

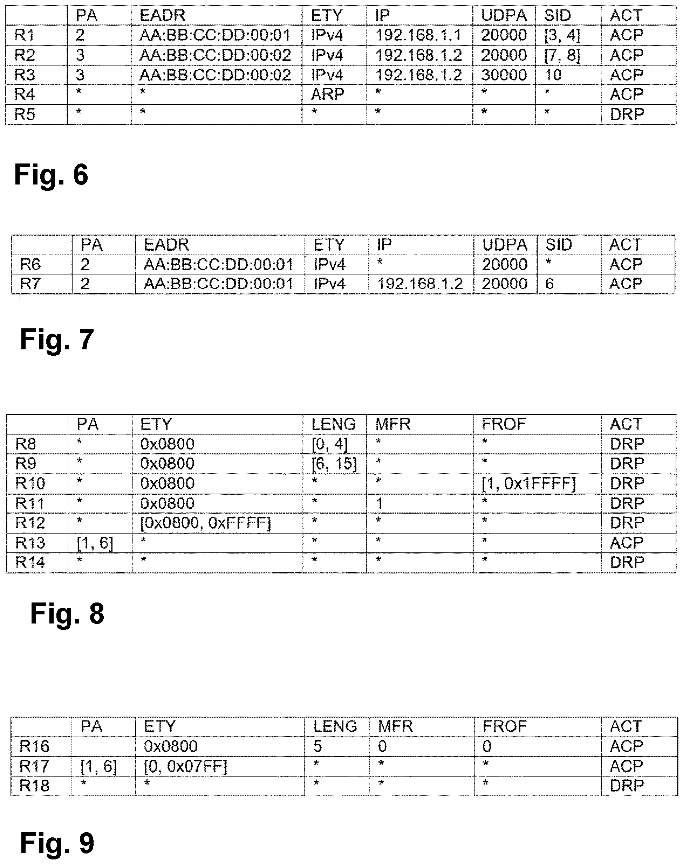

In einen Schritt S32 legt das Analysemittel AM grundsätzlich eine neue Firewallregel an, beispielsweise eine Firewallregel R1 (Figur 6), die das Analysemittel AM in einem Schritt S33 mit der Adresse des Steuergerät-Ports UDP versieht, beispielsweise mit der Adresse des Steuergerät-Port UDP12.

In einem Schritt S34 überprüft das Analysemittel AM, ob das Steuergerät, welches den aktuell ausgewählten Steuergerät-Port UDP aufweist, eine statische Internetadresse oder statische IP-Adresse aufweist oder nicht. Beispielsweise weist das Steuergerät 20 eine statische IP-Adresse IP1 auf, die das Analysemittel AM dann der aktuell zu bearbeitenden Firewallregel R1 hinzufügt. Die Steuergerät-Port Adresse des Ports UDP12 lautet im Ausführungsbeispiel der Firewallregel 1 beispielsweise 20000, die IP-Adresse IP1 oder Steuergerät-Adresse hat z.B. den Wert 192.168.1.1. Die IP-Adresse IP1 wird von dem Analysemittel AM in einem Schritt S39 der Firewallregel R1 hinzugefügt.

Wenn also eine statische Steuergerät-Adresse vorhanden ist, verzweigt das Verfahren V3 vom Schritt S34 in entsprechend einem Zweig Y (sozusagen einem "Ja-Zweig") zu dem Schritt S39, ansonsten über einen Zweig N zu direkt zum Schritt S35, bei dem der aktuell zu bearbeitenden Firewallregel, also beispielsweise der Firewallregel R1, die MAC-Adresse EADR des jeweiligen Steuergerätes hinzugefügt wird. Beispielsweise lautet der Wert der MAC-Adresse MC1 des Steuergeräts 20 AA:BB:CC:DD:00:01.

Ein Schritt S36 sieht anschließend vor, dass im Rahmen des Verfahrens V3 überprüft wird, ob weitere Funktionseinheiten, beispielsweise Dienstanbieter oder Signalgeneratoren, an den "Applikationsendpunkt", also an den jeweils durch das Verfahren V3 bearbeiteten Steuergerät-Port UDP (z. B. UDP12) angeschlossen sind. Wenn dies der Fall ist, verzweigt das Verfahren V3 in einem Schritt Y zu einem Schritt S36, in dem zur aktuellen Firewallregel, zum Beispiel der Firewallregel R1, eine weitere Adresse einer Funktionseinheit hinzugefügt wird, also beispielsweise bei der Firewallregel R1 die Adressen der Funktionseinheiten SP13 und SP14 deren Funktionseinheit-Adressen SID mit den Werten 3 und 4, siehe dazu Figur 6.

Wenn sämtliche Funktionseinheiten, die einen Steuergerät-Port nutzen, einer jeweiligen Firewallregel hinzugefügt sind, geht das Verfahren V3 in einem Zweig N weiter zu einem Schritt S37, der überprüft, ob am jeweiligen Steuergerät noch weitere Applikationsendpunkte oder Steuergerät-Ports zur Erzeugung von Firewallregeln vorhanden sind. Ist dies der Fall, geht es vom Schritt S37 in einem Zweig Y wieder zurück zum Schritt S31, ansonsten in einem Zweig N zu einem Abschluss-Schritt S38, bei dem das Verfahren V3 endet.

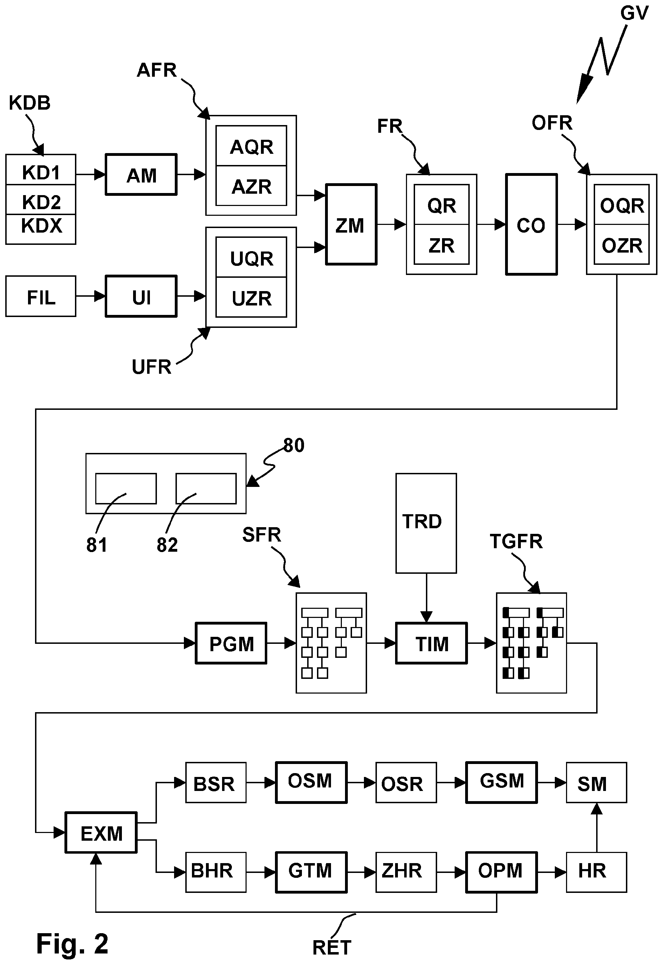

Die Generatorvorrichtung GV bzw. deren Analysemittel AM erzeugt also zunächst in dem Ablauf gemäß Figur 2 zunächst sozusagen rohe Firewallregeln AFR, die Quell-Firewallregeln AQR und/oder Ziel-Firewallregeln AZR umfassen können.

Weitere Firewallregeln FIL, beispielsweise für wahlweise benutzerseitig ein das Kommunikationsnetzwerk 6 anschließbare Endgeräte (Mobilfunk, z. B. Mobilfunkgeräte, Ladegeräte oder dergleichen), können über eine Eingabeschnittstelle UI definiert werden. Beispielsweise sind diese Firewallregeln in einer Datei FIL enthalten. Es ist und/oder weist die Eingabeschnittstelle UI eine Benutzeroberfläche auf, über die Firewallregeln eingegeben werden können.

Bevorzugt ist bei einer Eingabeschnittstelle einer erfindungsgemäßen Generatorvorrichtung auch eine Syntaxprüfung für eingegebene Firewallregeln vorhanden, was in der Zeichnung aber nicht dargestellt ist. Es ist auch möglich, dass die Eingabeschnittstelle UI Benutzereingaben automatisiert ergänzt oder eine eingegebene Datei automatisiert ergänzt.

Eingabeschnittstelle UI also anhand von Benutzereingaben und/oder der Firewall-regeln der Datei FIL Firewallregeln UFR bereit, wobei die Firewallregeln UFR Quell-Firewallregeln UQR und/oder Ziel-Firewallregeln UZR enthalten können. Eine Firewallregel UFR kann eine Quell-Firewallregel UQR oder eine Ziel-Firewallregel UZR oder eine Kombination davon sein.

Ein Zusammenfassungsmittel ZM fügt die Firewallregeln AFR und UFR zusammen und bildet damit Firewallregeln FR, die Quell-Firewallregeln QR und/oder Ziel-Firewallregeln ZR enthalten können. Dabei werden die Firewallregeln zunächst kumuliert und sortiert derart, dass sich das alle notwendigen Firewallregeln durch die Firewall-Einrichtung FW prinzipiell abarbeitbar sind. Beispielsweise darf eine generelle Drop-Anweisung, die alle Nachrichten blockieren oder verwerfen würde, nicht am Anfang einer Auflistung von Firewallregeln FR stehen.

Beispielsweise sind die Firewallregeln FR in der Art der Firewallregeln R1, R2, R3, R4 und R5 gemäß der Tabelle der Figur 6 aufgebaut. Jede Firewallregel R1 - R5 enthält beispielsweise eine Anschlussadresse PA des physikalischen Anschlusses PX des Kommunikationsknotens 10, die MAC-Adresse EADR des jeweiligen Steuergeräts S20 oder 30, sowie dessen IP-Adresse IP, also bei den Steuergeräten S20 und 30 die Adressen 192.168.1.1 bzw. 192.168.1.2.

Des Weiteren enthalten die Firewallregeln R1 - R5 die jeweilige Steuergerät-Port-Adresse UDPA, also an die über die eine jeweilige Funktionseinheit kommuniziert. Beispielsweise kommunizieren die Dienstanbieter SP13 und SP14, die die Funktionseinheit-Adressen 3 und 4 aufweisen, über den Steuergerät-Port UDP12, der die Adresse 2000 aufweist.

Die Anschlussadresse PA des Kommunikationsknotens 10, die MAC-Adresse EADR des jeweiligen Steuergeräts S20 oder 30, z.B. MC1 und MC2, sowie dessen IP-Adresse IP1 und IP2, also bei den Steuergeräten S20 und 30 die Adressen 192.168.1.1 bzw. 192.168.1.2, die Adressen der und Steuergerät-Ports, z.B. UDP11, UDP12, und die Adressen Funktionseinheiten, z.B. der Funktionseinheiten SP13, SP14, bilden Adress-Filterkriterien AFK der Firewallregeln R1, R2, R3, R4 und R5.

Die Firewallregeln R1, R2 und R3 sind also Quell-Firewallregeln, die Handlungsanweisungen ACT aufweisen, die jeweils als Weiterleitungsanweisung ACP (Accept) gestaltet sind. Somit können die Firewallregeln R1, R2 und R3 auch als White-List-Regeln verstanden werden. Die Firewallregeln R1, R2 und R3 ermöglichen es sozusagen, dass die Funktionseinheiten SP13, SP14, SP27, SP28 und SP210 jeweils Nachrichten über das Kommunikationsnetzwerk 6 senden können, wobei diese Nachrichten von der Firewall-Einreichung FW weitergeleitet werden.

Die Firewallregeln R1, R2, R3 definieren weiterhin einen Protokolltyp ETY, beispielsweise Internetprotokoll der Version 4 (IPV4) oder auch Hexadezimal 0x0800 in einer jeweiligen Nachricht.

Zusätzlich sieht die Firewallregel R4 vor, dass auch sogenannte ARP-Nachrichten auch dem Kommunikationsnetzwerk N übermittelbar sind und von der Firewall-Einrichtung FW weitergeleitet werden. Bei den AP Nachrichten kommt es nicht auf die benutzte Anschlussadresse PA MAC-Adresse an, so dass jeweils ein Stern in den betreffenden Spalten eingetragen ist. Der Protokoll-Typ ist jedoch auch bei Firewallregel AR4 als ARP angegeben. Aller übrigen Nachrichten sollen gemäß der Firewallregel R5 blockiert werden, was als Handlungsanweisung DRP in der rechten Spalte angegeben ist.

Ein Compiler CO, den man auch als ein Optimierungsmittel verstehen kann, sieht nun eine Reduzierung der Anzahl von Firewallregeln und Zusammenfassung von Firewallregeln vor. Das Ausführungsbeispiel der Tabelle gemäß Figur 7 betrifft dabei einen sehr einfachen Fall. Beispielsweise sind Firewallregeln R6 und R7 dieser Tabelle nahezu identisch und unterscheiden sich lediglich bezüglich ihrer Internetadresse IP, die bei der Firewallregel R6 frei wählbar ist, bei der Firewallregel R7 jedoch auf 192.186.1.2. festgelegt ist. Des Weiteren sieht die Firewallregel R6 vor, dass sämtliche Nachrichten von Funktionseinheiten, die über denselben Steuergerät-Port UDP kommunizieren, der beispielsweise die Adresse DPA = 20000 aufweist, kommunizieren dürfen. Die Handlungsanweisung ACT lautet bei beiden Firewallregeln R6 und R7 jeweils ACP.

Die Firewallregel R6 ist eine allgemeinere, die Firewallregel R7 implizit umfassende Firewallregel, so dass die Firewallregel R7 redundant ist. Dementsprechend löscht der Compiler CO die Firewallregel R7 bei diesem Ausführungsbeispiel.

Ein etwas komplizierteres Ausführungsbeispiel für Optimierung durch den Compiler CO ist in den Figuren 8 und 9 exemplarisch dargestellt.

Die Figur 8 zeigt eine Tabelle mit Firewallregeln R8 - R14, die jeweils eine physikalische Adresse PA, einen Protokoll-Typ ETY, eine Länge eines Nachrichtenkopfes an der jeweiligen Nachricht, einer sogenannten Headerlänge (LENG) in den Tabellen der Figuren 8 und 9. Weiterhin ist bei den Firewallregeln R8 - R14 eine Information zur möglichen Fragmentierungen von Nachrichten enthalten, nämlich ein Fragmentierungsflag MFR, wobei dieses Flag beispielsweise beim Wert 0 keine Fragmentierung vorsieht, beim Wert 1 jedoch anzeigt, dass weitere Fragmente folgen (dürfen). Ein Offset von Fragmenten ist in der Spalte FROF angegeben (Fragment-Offset). Schließlich zeigt die letzte Spalte die Handlungsanweisung ACT an.

Beispielsweise fasst der Compiler CO zunächst die Firewallregeln R8 und R9 zur Firewallregel R16 zusammen. Die Firewallregel 8 sagt zum Beispiel, dass Headerlängen von 0 bis 4 sowie von 6 bis 15 zu einer DROP-Aktion führen, d. h. im Umkehrschluss ein Header mit der Länge 5 akzeptiert wird. Dementsprechend invertiert der Compiler CO die Handlungsanweisung ACT, indem er die Blockierungsanweisung DRP in eine Weiterleitungsanweisung ACP invertiert.

In einem nächsten Schritt kombiniert der Compiler CO auch die Firewallregeln R10 und R11 mit der neuen Firewallregel R16, wobei beispielsweise aus der Firewallregel R10 hervorgeht, dass nur der Wert 0 in der Spalte FROF akzeptabel ist, also die Handlungsanweisung ACP nach sich zieht. Dementsprechend ist die Firewallregel R10 in der Firewallregel R16 abgebildet, indem bei der Firewallregel R16 für das Fragment-Offset 0 angegeben wird.

Die Firewallregel R11 hingegen sieht bei dem Fragmentierungsflag MFR den Wert 1 vor, so dass die Nachricht mit MFR = 1 verworfen wird (Blockierungsanweisung DRP). Bei Aufnahme der Firewallregel R11 in die Firewallregel R16 wird also das Fragmentierungsflag MFR sozusagen invertiert, um zu einer Weiterleitungsanweisung ACP zu kommen. Dementsprechend steht in der Spalte MFR bei der Firewallregel R16 der Wert 0, wenn die Firewallregel R11 in die Firewallregel R16 aufgenommen werden soll.

Die Firewallregel R17 ist aus den Firewallregeln R12 und R13 gebildet.

Die Firewallregel R12 sieht dabei vor, dass Protokoll-Typen oberhalb des hexadezimalen Wertes 0x080 zu einer Blockierung einer jeweiligen Nachricht führen (Handlungsanweisung ACT=DRP). Umgekehrt bedeutet dies, dass Nachrichten mit Protokoll-Typen ETY unterhalb des Bereichs der Firewallregel R12 akzeptiert werden, was in der Firewallregel R17 entsprechend abgebildet ist, indem der Protokoll-Typ ETY im Bereich von 0 bis 0x07ff hexadezimal liegen muss.

In diese teilweise definierte Firewallregel R17 kann nun die Firewallregel R13 integriert werden, bei der alle physikalischen Adressen oder Anschluss-Adressen PA von 1 bis 6 akzeptiert werden. Die Firewallregel R17 enthält also diesen Adressbereich PA = [01, 6].

Die Firewallregel R14 entspricht der Firewallregel R18.

Die Firewall-Einrichtung FW weist Filterhardware 60 sowie Filtersoftware 70 auf. Die Filterhardware 60 umfasst beispielsweise sogenannte TCAMs, FPGAs oder dergleichen. Die Filterhardware 60 ist zur Filterung von Nachrichten des Kommunikationsnetzwerks 6, also beispielsweise der Nachrichten N30 oder N20, mit hoher Geschwindigkeit ausgestaltet. Demgegenüber ist eine Filtersoftware 70, die ebenfalls einen Bestandteil der Filtereinrichtung FW bildet, flexibler konfigurierbar und kann insbesondere Nachrichten mit größerer Länge oder komplexeren Inhalts prüfen.

Eine mögliche Prüfroutine der Firewall-Einrichtung FW ist in Figur 3 als Verfahren V1 exemplarisch dargestellt.

In einem Schritt S12 des Verfahrens V1 wird beispielsweise von der Firewall-Einrichtung FW eine Nachricht, z.B. die Nachricht N20 oder N30, des Kommunikationsnetzwerks 60 eingelesen. Mithin erreicht also die Nachricht N20 oder N30 das Verfahren V1.

Sodann wird zunächst in einem Schritt S12 eine Prüfung anhand der Filterhardware 60 durchgeführt. Wenn dabei festgestellt wird, dass die Nachricht N20 oder N30 zu blockieren oder zu löschen ist, verzweigt das Verfahren V1 in einen Zweig Y und in einen Verfahrensschritt S17, der das Blockieren oder Verwerfen der Nachricht vorsieht.

Wenn jedoch im Schritt S12 festgestellt wird, dass die Nachricht an sich der Überprüfung durch die Filterhardware 60 standhält, verzweigt das Verfahren V1 in einen Zweig N zu einem weiteren Prüfschritt S13, in dem weitere Firewallregeln durch die Filterhardware 60 angewendet werden.

Wenn nun eine Nachricht als vollständig akzeptabel ermittelt wird, verzweigt das Verfahren V1 über einen Zweig Y zu einem Schritt S18, der eine Weiterleitung der Nachricht vorsieht, beispielsweise eine Weiterleitung vom Anschluss P12 zum Anschluss P13 und somit zum Steuergerät 30.

Wenn jedoch im Schritt S13 eine Nachricht noch nicht akzeptiert worden ist, verzweigt das Verfahren zu einem Schritt S14, nämlich zu einer weiteren Überprüfung anhand der Filtersoftware 70. Es ist nämlich beispielsweise möglich, dass eine Nachricht im Schritt S13 zwar weitgehend geprüft werden kann, z.B. hinsichtlich ihrer ersten Adressangaben in ihrem Kopf, jedoch weitergehende Informationen der Nachricht, beispielsweise eine Adresse einer Funktionseinheit, nicht geprüft werden können. Diese weitere Prüfung obliegt dann der Filtersoftware 70 im Schritt S15. Mithin wird also die Nachricht im Schritt S14 zum Prozessor 11 des Kommunikationsknotens 10 weitergeleitet, der zur Ausführung des Programmcodes der Filtersoftware 70 ausgestaltet ist.

Die Filtersoftware 70 erkennt nun in einem Schritt S15, ob eine Nachricht zu blockieren ist oder nicht. Eine zu blockierende oder zu verwerfende Nachricht wird über einen Zweig Y zum Schritt S17 weitergeleitet, was zum Verwerfen oder Blockieren der Nachricht führt.

Wenn jedoch die Filtersoftware 70 im Schritt S16 erkennt, dass die Nachricht nicht zu verwerfen ist, sendet sie die Nachricht in einem Schritt S16 weiter zu dem Schritt S18, d.h. die Nachricht wird beispielsweise vom einen Anschluss P12 zum anderen Anschluss P13 weitergeleitet. Selbstverständlich können sich an den Schritt S18 noch weitere Prüfschritte, beispielsweise Software-Prüfschritte anhand der Filtersoftware 70 und/oder Hardware-Prüfschritte anhand der Filterhardware 60 anschließen.

Eine optimierte Zuweisung von Firewallregeln zur Filterhardware 60 oder Filtersoftware 70 kann durch die Generatorvorrichtung GV in folgender Weise geleistet werden.

Ein Strukturierungsmittel PGM erzeugt beispielsweise anhand der Firewallregeln OFR, die ja vorteilhaft bereits optimiert sind, oder auch anhand der noch nicht optimierten Firewallregeln FR (was auch möglich wäre), strukturierte Firewallregeln SFR.

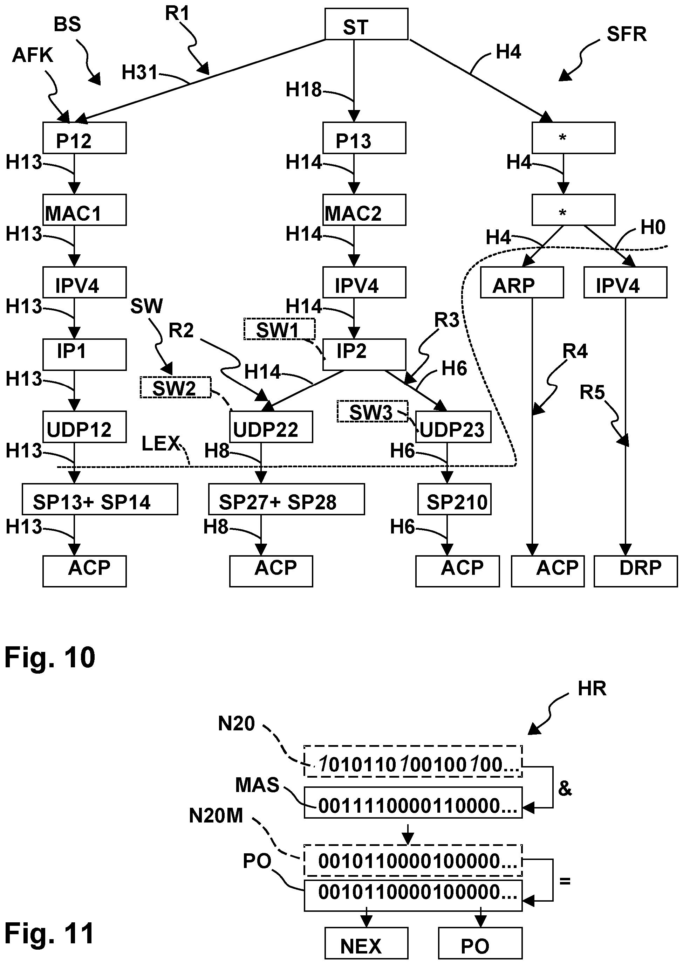

Eine derartige Struktur ist beispielhaft in Figur 10 für die Firewallregeln R1-R5 dargestellt. Dabei stellt das Strukturierungsmittel PGM beispielsweise fest, dass bei den Firewallregeln R2 und R3 Gemeinsamkeiten bestehen in Bezug auf die Überprüfung des physikalischen Anschlusses des Kommunikationsknotens 10, also hier des Anschlusses P13 mit der entsprechenden Anschlussadresse PA=2, sowie in Bezug auf die MAC-Adresse ADR, den Protokolltyp sowie die Steuergerätadresse des Steuergeräts, nämlich IP2. Allerdings sind die Funktionseinheiten S27 und SP28 sowie SP210 an unterschiedliche Steuergerät-Ports oder Applikationsendpunkte angeschlossen, nämlich an die Ports UDP22 und UDP23, was zu einer entsprechenden Verzweigung führt.

Es stellt sich daher die Frage, welche Firewallregel oder welcher Teil einer Firewallregel eine größere Belastung für die Firewall-Einrichtung FW darstellt. Dabei ist festzustellen, dass allein schon durch die Strukturierung bzw. Bildung der Baumstruktur BS gemäß Figur 10 eine Überprüfung einzelner Teile einer Nachricht möglichst selten stattfindet und eine einmal bereits erfolgte Überprüfung möglichst nicht wiederholt wird. Darüber hinaus stellen die nachfolgenden Maßnahmen eine weitere Verbesserung dar.

Ein Häufigkeit-Zuordnungsmittel TIM fügt nämlich Häufigskeitswerte TRD zu den einzelnen Prüfschritten, die hinsichtlich der einzelnen Adressbestandteile einer zu überprüfenden Nachricht als Adress-Filterkriterien AFK bei den Firewallregeln R1 bis R5 vorhanden sind, hinzu. Beispielsweise ist ausgehend von einem Schritt ST der Baumstruktur BS bei einer Nachricht zu überprüfen, ob sie an dem Anschluss P12 gesendet worden ist. Eine derartige Überprüfung findet bei einem beispielsweise simulierten oder tatsächlichen Datenverkehr beispielsweise 31-mal statt. Wenn das Filter-Adresskriterium P12 erfüllt ist, wurde die jeweilige Nachricht von der Firewall-Einrichtung FW über den Anschluss P12 empfangen.

In der Baumstruktur BS sind die konkreten Häufigkeitswerte eines Prüfschritts im Rahmen einer Firewallregel mit "H" und einer sich daran anschließenden Zahl angegeben, wobei die Zahl die Häufigkeit der jeweiligen Überprüfung darstellt, H18 also beispielsweise den Häufigkeitswert 18.

Dann schließen sich die weiteren Prüfungen nach MAC-Adresse, Art des Protokolls oder Internetprotokolls, Adresse des Steuergeräts (IP1) und Steuergerät-Port (UDP12) an, wobei jede Prüfung 13-mal stattfindet, wenn die Nachricht eine korrekte Nachricht ist und nicht eine an sich unzulässige, beispielsweise in das System bzw. das Kommunikationsnetz 5 am Anschluss P12 eingeschleuste Nachricht darstellt. Final führt dies nach jeweils insgesamt 13 Prüfungen der übrigen Adressbestandteile, die zusätzlich zu dem Adressbestandteil des Anschlusses P12 vorhanden sind, zu der Handlungsanweisung ACT, also Weiterleiten der jeweiligen Nachricht.

Wenn die Nachricht jedoch nicht über den Anschluss P12 gekommen ist, sind weitere Prüfungen notwendig. Beispielsweise wird dann überprüft, ob die Nachricht über den Anschluss P13 empfangen worden ist. Eine solche Überprüfung findet insgesamt 14mal positiv statt und 4mal negativ, d.h. nach insgesamt 18 Prüfungen fallen 14 weitere Prüfungen hinsichtlich der Firewallregeln R2 und R3 an, während nur 4 weitere Prüfungen hinsichtlich der Firewallregeln R4 und R5 nötig sind.

Die Baumstruktur BS zeigt auch, dass die Firewallregeln R2 und R3 bis zu der Prüfung der Steuergerätadresse IP2 identisch sind, d.h. die Häufigkeitswerte der Prüfungen sind identisch.

Jedenfalls wird ausgehend von der Überprüfung nach der Steuergerätadresse (IP2) noch weitere 14mal geprüft, ob die Nachricht über den Steuergerätport UDP22 gesendet worden ist. Dies ist in insgesamt 8 Fällen der Fall, was zur weiteren Überprüfung der Dienstadressen der Funktionseinheiten SP27 und SP28 führt. Wenn eine Nachricht über den Steuergerätport UDP23 empfangen würde, muss dies insgesamt 6mal überprüft werden, was zum Häufigkeitswert H6 führt.

Die Verkehrsdaten TRD mit den Häufigkeitswerten Hx werden beispielsweise durch einen Überprüfung eines realen Datenverkehrs über den Kommunikationsknoten 10 ermittelt, beispielsweise anhand eines sogenannten Datenloggers DL. Es ist aber auch eine Simulation anhand der Kommunikationsbeziehungsdaten KDB und einer entsprechenden Simulationssoftware möglich, um die Verkehrsdaten TRD und die darin enthaltenen Häufigkeitswerte zu ermitteln. Eine Simulation kann auch beispielsweise die Erfassung statistischer Verkehrsdaten umfassen oder dadurch gebildet sein.

Bei begrenzt verfügbarem Umfang von über die Filterhardware 60 prüfbaren Firewallregeln ist es vorteilhaft diejenigen Firewallregeln der Filterhardware 60 zuzuordnen, die häufig zur Überprüfung gelangen. Eine einfache Möglichkeit würde nun beispielsweise vorsehen, dass bei beispielsweise vier durch die Filterhardware 60 anwendbaren Firewallregeln die erste Firewallregel vollständig, die zweite und dritte Firewallregel bis zur Verzweigung der bei der Überprüfung der Steuergerät-Adresse (IP2) und die vierten und fünften Firewallregeln jeweils wieder vollständig überprüft werden würden. Das würde jedoch die Anzahl der durch die Filterhardware 60 leistbaren Prüfschritte, die ja sehr schnell sind, unnötig reduzieren bzw. die Effizienz der Filterhardware 60 nicht optimal ausnutzen.

Hier schafft ein Zuweisungsmittel EXM der Generatorvorrichtung GV Abhilfe. Im vorliegenden Fall ordnet das Zuweisungsmittel EXM beispielsweise die Firewallregel R1 vollständig Basis-Hardware-Firewallregeln DHR zu, die anschließend von der Filterhardware 60 auszuführen sind. Die Firewallregeln R2 und R3 ordnet das Zuweisungsmittel EXM jedoch nicht nur bis zur Überprüfung der Steuergerät-Adresse IP2 zu, sondern auch einschließlich der Überprüfung der Steuergerät-Ports UDP (UDP22 und UDP23) zu, so dass die häufigen Prüfungen (man erkennt die Häufigkeitswerte H14 und H6 zwischen der Überprüfung der Steuergerät-Adresse IP2 und den Steuergerät-Ports UDP22 und UDP23) als eine Hardware-Firewallregel abgebildet sind.

Die Firewallregeln R4 und R5 hingegen werden nur teilweise einer Hardware-Firewallregel zugeordnet, nämlich bis zur Überprüfung der MAC-Adresse. Angedeutet ist dies in Figur 10 anhand einer Linie LEX.

Das Zuweisungsmittel EXM bildet aus solchen Firewallregeln, die sie nicht als Basis-Hardware-Firewallregeln BHR ausgeben kann, in Basis-Software-Firewallregeln BSR ab. Dabei ist es möglich, dass beispielsweise eine Basis-Hardware-Regel auf eine Basis-Software-Regel verweist, zum Beispiel um eine Firewallregel, die aus den strukturierten Firewallregeln SFR gewonnen ist und eine, vollständig abzubilden. Beispielsweise kann die Firewallregel R1 nur bis zur Linie LEX als Basis-Hardware-Firewallregel abgebildet sein, während die Überprüfung auf die Adresse der Funktionseinheiten SP13 und SP14 als Software-Firewallregel und somit Teil der Basis-Software-Firewallregel BSR durchzuführen ist.

Ein Generierungsmittel GTM zur Erzeugung von durch die Firewall-Hardware 60 ausführbaren Firewallregeln erzeugt aus den Basis-Hardware-Firewallregeln BHR durch die Filterhardware 60 unmittelbar ausführbare Hardware-Firewallregeln, die nachfolgend jedoch als Zwischen-Hardware-Firewallregeln ZHR bezeichnet werden, weil die noch einer weiteren Optimierung unterzogen werden, die jedoch optional ist.

Beispielsweise umfasst eine Handware-Firewallregel, zum Beispiel eine Zwischen-Hardware-Firewallregel, eine Maske MAS, einen Vergleichswert COM sowie einen Verweis PO, der auf eine nachfolgende Aktion, beispielsweise auf eine nachfolgende Softwareprüfroutine verweist. Die Marke MAS dient dazu, einen Bereich einer Nachricht zu maskieren, beispielsweise die ersten 16 BIT eines Headers oder Kopfes der Nachricht. Der maskierte Wert wird dann mit dem Vergleichswert COM verglichen. Wenn der maskierte Wert und der Vergleichswert übereinstimmen, wird beispielsweise der Verweis PO aktiv. Der Verweis PO Verweis beispielsweise auf eine Software-Prüfroutine. Wenn jedoch der maskierte Wert und der Vergleichswert nicht übereinstimmen, verweist die Hardware-Firewallregel beispielsweise darauf, dass mindestens eine weitere Firewallregel (Hardware-Firewallregel und/oder Software-Firewallregel) anzuwenden ist, was beispielsweise als ein Verweis NEX symbolisch dargestellt ist.

Nun ist es aber möglich, dass sich Zwischen-Hardware-Firewallregeln ZHR nahezu gleichen und sich beispielsweise nur in einem einzigen BIT oder an einer einzigen BIT-Stelle unterscheiden. In diesem Fall wird aus zwei Zwischen-Hardware-Firewallregeln ZHR durch das Optimierungsmittel OPM eine einzige Zwischen-Hardware-Firewallregel gebildet, und eine sozusagen frei gewordene Hardware-Firewallregel in einem Zweig RET an das Zuweisungsmittel EXM zurück gemeldet.

Das Zuweisungsmittel EXM kann dann diese frei gewordene Hardware-Firewallregel für die Generierung der Basis-Hardware-Firewallregeln verwenden und beispielsweise eine Software-Firewallregel aus den Firewallregeln BSR entnehmen und den Hardware-Firewallregeln BHR zuordnen. Sodann können wieder das Generierungsmittel GTM und das Optimierungsmittel OPM aktiv werden und eine mögliche weitere Optimierung leisten.

Auch im in Figur 2 vom Zuweisungsmittel EXM ausgehenden oberen Zweig ist eine Optimierung möglich. Beispielsweise kann ein Optimierungsmittel OSM die Basis-Software-Firewallregeln BSR anhand der Häufigkeitswerte der Verkehrsdaten TRD optimieren. So kann beispielsweise eine häufig vorkommende Software-Firewallregel vor eine Firewallregel, die selten verwendet wird, vorgezogen werden. Auf diese Weise generiert das Optimierungsmittel OSM die optimierten Software-Firewallregeln OSR, aus denen ein Generator GSM dann die finalen Prüfroutinen der Filtersoftware SM generiert, beispielsweise Software-Prüfroutinen SW1, SW2 und SW3.

Auch in diesem Zusammenhang kann die Baumstruktur BS vorteilhaft zum Einsatz kommen. Beispielsweise kann das Generierungsmittel GTM die einzelnen Prüfschritte der Baumstruktur BS in Software-Prüfroutinen SW abbilden. So kann beispielsweise die Überprüfung der Steuergerät-Adresse IP2 anhand einer Software-Prüfroutine SW1 stattfinden, die dann direkt in Software-Prüfroutinen SW2 oder SW3 weiter verweist. Beispielsweise sind die Startadressen von Softwareroutinen SW2 und SW3, die zur Überprüfung der Steuergerät-Ports UDP22 und UDP23 vorgesehen sind, direkt in der Software-Prüfroutine SW1 hinterlegt.

Die erläuterten Mittel und Funktionsteile der Generatorvorrichtung GV, beispielsweise das Analysemittel AM, die Eingabeschnittstelle UI, das Zusammenfassungsmittel ZM, der Compiler CO etc., sind vorzugsweise als Softwaremodule oder Programmmodule ausgestaltet, die Programmcode enthalten, der von einem Prozessor 81 eines in Figur 2 schematisch dargestellten Rechners 80 ausführbar ist. Dieser Rechner 80 bildet dann die Generatorvorrichtung GV. Die Softwaremodule oder Programmmodule sind beispielsweise in einem Speicher 82 des Rechners 80 abgelegt, der mit dem Prozessor 81 verbunden ist.

Die Erfindung betrifft unter anderem ein Verfahren zur Ermittlung von Firewall-Regeln für einen Kommunikationsknoten (10) eines Kommunikationsnetzwerks (6) eines Kraftfahrzeugs (5), wobei Steuergeräte (20, 30) des Kraftfahrzeugs (5) über den Kommunikationsknoten (10) miteinander verbunden sind und der Kommunikationsknoten (10) zur Übermittlung von Nachrichten (N20, N30) vorgesehen und ausgestaltet ist, anhand derer Funktionseinheiten (QF, ZF) der Steuergeräte (20, 30) einander Informationen übermitteln, wobei Kommunikationsbeziehungen (KD1, KD2) zwischen Funktionseinheiten (QF, ZF), die Bestandteile voneinander separater und jeweils mit dem Kommunikationsknoten (10) verbundener Steuergeräte (20, 30) bilden, in Kommunikationsbeziehungsdaten (KDB) gespeichert sind, die Adressdaten einer sendenden Quell-Funktionseinheit (QF) und/oder Ziel-Adressdaten einer empfangenden Ziel-Funktionseinheit (ZF) umfassen, wobei der Kommunikationsknoten (10) eine Firewall-Einrichtung (FW) zur Überprüfung von Nachrichten (N20, N30), die der Kommunikationsknoten (10) zwischen mit ihm verbundenen Steuergeräten (20, 30) übermitteln soll, anhand von Firewallregeln (FR) aufweist, wobei das Verfahren vorsieht:
- Ermitteln von Firewallregeln (FR) durch ein Analysemittel (AM) einer Generatorvorrichtung (GV) anhand der Kommunikationsbeziehungsdaten (KDB), wobei das Analysemittel (AM) eine Quell-Firewallregel (QR) anhand von der Quell-Adressdaten der Quell-Funktionseinheit (QF), die Nachrichten (N20, N30) gemäß einer jeweiligen Kommunikationsbeziehung (KD1, KD2) sendet und/oder eine Ziel-Firewallregel (ZR) anhand von Ziel-Adressdaten einer Ziel-Funktionseinheit (ZF), die Nachrichten (N20, N30) gemäß einer jeweiligen Kommunikationsbeziehung empfängt, ermittelt, wobei die Quell-Firewallregel (QR) Filterkriterien aufweist und dafür vorgesehen ist, dass die Firewall-Einrichtung (FW) eine von der Quell-Funktionseinheit (QF) gesendete Nachricht (N20, N30) nur dann an die Ziel-Funktionseinheit (ZF) weiterleitet, wenn die in der Nachricht (N20, N30) enthaltene Quell-Adressdaten der Quell-Funktionseinheit (QF) die Filterkriterien der Quell-Firewallregel (QR) erfüllen, und wobei die Ziel-Firewallregel (ZR) Filterkriterien aufweist und dafür vorgesehen ist, dass die Firewall-Einrichtung (FW) eine an die Ziel-Funktionseinheit (ZF) gerichtete Nachricht (N20, N30) nur dann an die Ziel-Funktionseinheit (ZF) weiterleitet, wenn die in der Nachricht (N20, N30) enthaltenen Ziel-Adressdaten der Ziel-Funktionseinheit (ZF) die Kriterien der Ziel-Firewallregel (ZR) erfüllen.

## Patentansprüche

1. Verfahren zur Ermittlung von Firewall-Regeln für einen Kommunikationsknoten (10) eines Kommunikationsnetzwerks (6) eines Kraftfahrzeugs (5), wobei Steuergeräte (20, 30) des Kraftfahrzeugs (5) über den Kommunikationsknoten (10) miteinander verbunden sind und der Kommunikationsknoten (10) zur Übermittlung von Nachrichten (N20, N30) vorgesehen und ausgestaltet ist, anhand derer Funktionseinheiten (QF, ZF) der Steuergeräte (20, 30) einander Informationen übermitteln, wobei Kommunikationsbeziehungen (KD1, KD2) zwischen Funktionseinheiten (QF, ZF), die Bestandteile voneinander separater und jeweils mit dem Kommunikationsknoten (10) verbundener Steuergeräte (20, 30) bilden, in Kommunikationsbeziehungsdaten (KDB), insbesondere einer Kommunikationsbeziehungsdatenbank (KDB), gespeichert sind, wobei die Kommunikationsbeziehungsdaten (KDB) Quell-Adressdaten einer eine jeweilige Nachricht (N20, N30) gemäß der Kommunikationsbeziehung (KD1, KD2) sendenden Quell-Funktionseinheit (QF) und/oder Ziel-Adressdaten einer die Nachricht (N20, N30) empfangenden Ziel-Funktionseinheit (ZF) umfassen, wobei der Kommunikationsknoten (10) eine Firewall-Einrichtung (FW) zur Überprüfung von Nachrichten (N20, N30), die der Kommunikationsknoten (10) zwischen mit ihm verbundenen Steuergeräten (20, 30) übermitteln soll, anhand von Firewallregeln (FR) aufweist, wobei das Verfahren **gekennzeichnet ist durch**:
- Ermitteln von Firewallregeln (FR) **durch** ein Analysemittel (AM) einer Generatorvorrichtung (GV) anhand der Kommunikationsbeziehungsdaten (KDB), wobei das Analysemittel (AM) eine Quell-Firewallregel (QR) anhand von der Quell-Adressdaten der Quell-Funktionseinheit (QF), die Nachrichten (N20, N30) gemäß einer jeweiligen Kommunikationsbeziehung (KD1, KD2) sendet und/oder eine Ziel-Firewallregel (ZR) anhand von Ziel-Adressdaten einer Ziel-Funktionseinheit (ZF), die Nachrichten (N20, N30) gemäß einer jeweiligen Kommunikationsbeziehung empfängt, ermittelt, wobei die Quell-Firewallregel (QR) Filterkriterien aufweist und dafür vorgesehen ist, dass die Firewall-Einrichtung (FW) eine von der Quell-Funktionseinheit (QF) gesendete Nachricht (N20, N30) nur dann an die Ziel-Funktionseinheit (ZF) weiterleitet, wenn die in der Nachricht (N20, N30) enthaltene Quell-Adressdaten der Quell-Funktionseinheit (QF) die Filterkriterien der Quell-Firewallregel (QR) erfüllen, und wobei die Ziel-Firewallregel (ZR) Filterkriterien aufweist und dafür vorgesehen ist, dass die Firewall-Einrichtung (FW) eine an die Ziel-Funktionseinheit (ZF) gerichtete Nachricht (N20, N30) nur dann an die Ziel-Funktionseinheit (ZF) weiterleitet, wenn die in der Nachricht (N20, N30) enthaltenen Ziel-Adressdaten der Ziel-Funktionseinheit (ZF) die Kriterien der Ziel-Firewallregel (ZR) erfüllen.

2. Verfahren nach Anspruch 1, **dadurch gekennzeichnet, dass** das Analysemittel (AM) der Generatorvorrichtung (GV) zur Erzeugung der Firewallregeln (FR) eine Liste der in dem Kommunikationsnetzwerk (6) enthaltenen Steuergeräte (20, 30) ermittelt und/oder eine Topologie des Kommunikationsnetzwerks (6) analysiert und/oder dass das Analysemittel (AM) zur Erzeugung der Firewallregeln (FR) ermittelt, welche Funktionseinheiten (QF, ZF) das jeweilige Steuergerät (20, 30) aufweist.

3. Verfahren nach Anspruch 1 oder 2, **dadurch gekennzeichnet, dass** die Funktionseinheit (QF, ZF) ein Dienst (SP13, SP14) und/oder ein Signalgenerator ist und/oder die Funktionseinheit (QF, ZF) als ein Funktionsmodul mit Programmcode ausgestaltet ist, der durch einen Prozessor (21, 31) des Steuergeräts (20, 30) zur Bereitstellung der Funktionen der Funktionseinheit (QF, ZF) ausführbar ist.

4. Verfahren nach einem der vorhergehenden Ansprüche, **dadurch gekennzeichnet, dass** das Analysemittel (AM) Adressdaten eines Ports (UDP12, UDP13) des Steuergeräts (20, 30), der zum Senden von Nachrichten (N20, N30) einer Quell-Funktionseinheit (QF) gemäß einer der Quell-Funktionseinheit (QF) zugeordneten Kommunikationsbeziehung (KD1, KD2) verwendet wird, einer der Quell-Funktionseinheit (QF) zugeordneten Quell-Firewallregel (QR) hinzufügt und/oder das Analysemittel (AM) Adressdaten eines Ports (UDP12, UDP13) des Steuergeräts (20, 30), der zum Weiterleiten von Nachrichten (N20, N30) an eine Ziel-Funktionseinheit (ZF) gemäß einer der Ziel-Funktionseinheit (ZF) zugeordneten Kommunikationsbeziehung (KD1, KD2) verwendet wird, einer der Ziel-Funktionseinheit (ZF) zugeordneten Ziel-Firewallregel (ZR) hinzufügt.

5. Verfahren nach einem der vorhergehenden Ansprüche, **dadurch gekennzeichnet, dass** das Analysemittel (AM) Adressdaten einer Quell-Funktionseinheit (QF), die Nachrichten (N20, N30) gemäß einer der Quell-Funktionseinheit (QF) zugeordneten Kommunikationsbeziehung (KD1, KD2) sendet, einer der Quell-Funktionseinheit (QF) zugeordneten Quell-Firewallregel (QR) hinzufügt und/oder das Analysemittel (AM) Adressdaten einer Ziel-Funktionseinheit (ZF), die Nachrichten (N20, N30) gemäß einer der Ziel-Funktionseinheit (ZF) zugeordneten Kommunikationsbeziehung (KD1, KD2) empfängt, einer der Ziel-Funktionseinheit (ZF) zugeordneten Ziel-Firewallregel (ZR) hinzufügt.

6. Verfahren nach einem der vorhergehenden Ansprüche, **dadurch gekennzeichnet, dass** das Analysemittel (AM) zu einer Quell-Firewallregel (QR), die einer Quell-Funktionseinheit (QF) zugeordnet ist, Adressdaten eines physikalischen Anschlusses (P12, P13) eines Kommunikationsknotens (10) hinzufügt, wobei der physikalische Anschluss (P12, P13) zum Senden von Nachrichten (N20, N30) der Quell-Funktionseinheit (QF) gemäß einer der Quell-Funktionseinheit (QF) zugeordneten Kommunikationsbeziehung (KD1, KD2) verwendet wird, und/oder das Analysemittel (AM) zu einer Ziel-Firewallregel (ZR), die einer Ziel-Funktionseinheit (ZF) zugeordnet ist, Adressdaten eines physikalischen Anschlusses (P12, P13) eines Kommunikationsknotens (10) hinzufügt, wobei der physikalische Anschluss (P12, P13) zum Weiterleiten von Nachrichten (N20, N30) an die Ziel-Funktionseinheit (ZF) gemäß einer der Ziel-Funktionseinheit (ZF) zugeordneten Kommunikationsbeziehung (KD1, KD2) verwendet wird.

7. Verfahren nach einem der vorhergehenden Ansprüche, **dadurch gekennzeichnet, dass** das Analysemittel (AM) einer Quell-Firewallregel (QR), die zu einer Quell-Funktionseinheit (QF), die zu einem Steuergerät (20, 30) mit einer festen IP-Adresse gehört, die feste IP-Adresse des Steuergeräts (20, 30) hinzufügt und/oder einer Ziel-Firewallregel (ZR), die zu einer Ziel-Funktionseinheit (ZF), die zu einem Steuergerät (20, 30) mit einer festen IP-Adresse gehört, die feste IP-Adresse des Steuergeräts (20, 30) hinzufügt und/oder dass das Analysemittel (AM) einer Quell-Firewallregel (QR), die einer Quell-Funktionseinheit (QF) zugeordnet ist, eine MAC-Adresse des Steuergeräts (20, 30) hinzufügt und/oder einer Ziel-Firewallregel (ZR), die einer Ziel-Funktionseinheit (ZF) zugeordnet ist, eine MAC-Adresse des Steuergeräts (20, 30) hinzufügt.

8. Verfahren nach einem der vorhergehenden Ansprüche, **gekennzeichnet, durch** Hinzufügen von über eine Eingabeschnittstelle (UI) der Generatorvorrichtung (GV) empfangener Firewallregeln (FR) zu den von durch das Analysemittel (AM) bereitgestellten Firewallregeln (FR) durch Zusammenfassungsmittel (ZM) der Generatorvorrichtung (GV).

9. Verfahren nach einem der vorhergehenden Ansprüche, **gekennzeichnet durch** Zusammenfassen mehrerer Ziel-Firewallregeln (ZR) und/oder mehrerer Quell-Firewallregeln (QR) durch einen Compiler (CO) der Generatorvorrichtung (GV).

10. Verfahren nach Anspruch 9, **dadurch gekennzeichnet, dass** der Compiler (CO) Ziel-Firewallregeln (ZR) oder Quell-Firewallregeln (QR) zusammenfasst, wenn deren Filterkriterien, insbesondere in deren Filterkriterien definierte Adressbereiche, ganz oder teilweise identisch sind, und/oder dass der Compiler (CO) Ziel-Firewallregeln (ZR) oder Quell-Firewallregeln (QR) zusammenfasst, wenn deren Handlungsanweisungen (ACT), nämlich eine Nachricht (N20, N30) zu blockieren oder weiterzuleiten, identisch sind, und/oder dass der Compiler (CO) Firewallregeln (FR) iterativ zusammenfasst, wobei der Compiler (CO) eine aus zusammengefassten Firewallregeln (FR) gebildete Firewallregel (FR) mit einer weiteren Firewallregel (FR) kombiniert.

11. Verfahren nach einem der Ansprüche 9 oder 10, **dadurch gekennzeichnet, dass** der Compiler (CO) bei dem Zusammenfassen von Firewallregeln (FR) eine erste Firewallregel (FR) und eine zweite Firewallregel (FR) miteinander zu einer dritten Firewallregel (FR) kombiniert, die die Filterkriterien der ersten Firewallregel (FR) und der zweiten Firewallregel (FR) zu Sammel-Filterkriterien zusammenfasst, eine Überprüfung einer Nachricht (N20, N30) anhand der Sammel-Filterkriterien einer Überprüfung der Nachricht (N20, N30) anhand der Filterkriterien der ersten Firewallregel (FR) und der Filterkriterien der zweiten Firewallregel (FR) entspricht, und/oder dass der Compiler (CO) bei der Bildung der dritten Firewallregel (FR) einen ersten Adressbereich der ersten Firewallregel (FR) und einen zweiten Adressbereich der zweiten Firewallregel (FR) zu einem gemeinsamen, den ersten Adressbereich und den zweiten Adressbereich umfassenden dritten Adressbereich der dritten Firewallregel (FR) kombiniert, wenn die Filterkriterien der ersten Firewallregel (FR) und der zweiten Firewallregel (FR) dieselbe Handlungsanweisung (ACT) für die Firewall-Einrichtung (FW) aufweisen, wobei die Handlungsanweisung (ACT) entweder eine Weiterleitungsanweisung (ACP) zu einem Weiterleiten oder eine Blockierungsanweisung (DRP) zu einem Blockieren von Nachrichten (N20, N30) ist.

12. Verfahren nach Anspruch 13, **dadurch gekennzeichnet, dass** die erste Firewallregel (FR) einen ersten Adressbereich definiert und die zweite Firewallregel (FR) einen zweiten Adressbereich definiert und dem ersten und dem zweiten Adressbereich dieselbe erste Handlungsanweisung (ACT) für die Firewall-Einrichtung (FW) zugeordnet ist, wobei die erste Handlungsanweisung (ACT) entweder eine Weiterleitungsanweisung (ACP) zu einem Weiterleiten oder eine Blockierungsanweisung (DRP) zu einem Blockieren von Nachrichten (N20, N30) ist, die eine Adresse des ersten Adressbereichs oder des zweiten Adressbereichs aufweisen, wobei der Compiler (CO) zur Bildung der dritten Firewallregel (FR) einen dritten Adressbereich ermittelt, der außerhalb oder zwischen dem ersten Adressbereich und dem zweiten Adressbereich liegt, und der dritten Firewallregel (FR) als eine dritte Handlungsanweisung (ACT) eine Inversion der ersten Handlungsanweisung (ACT) zuordnet, wobei die dritte Handlungsanweisung (ACT) eine Blockierungsanweisung (DRP) ist, wenn die erste Handlungsanweisung (ACT) eine Weiterleitungsanweisung (ACP) ist, oder eine Weiterleitungsanweisung (ACP) ist, wenn die erste Handlungsanweisung (ACT) eine Blockierungsanweisung (DRP) ist.

13. Verfahren nach einem der vorhergehenden Ansprüche, **dadurch gekennzeichnet, dass** die Firewall-Einrichtung (FW) zur Anwendung von Filterkriterien der Firewallregeln auf Nachrichten (N20, N30) der Funktionseinheiten (QF, ZF) eine durch einen Prozessor (11) des Kommunikationsknotens (10) ausführbare Filtersoftware (70) zur Ausführung von Software-Firewallregeln (BSR, OSR) und eine mit Hardware-Firewallregeln (HR) konfigurierbare Filterhardware (60) aufweist, wobei die anhand der Filterhardware (60) definierbaren Hardware-Firewallregeln (HR) einen vorbestimmten Umfang aufweisen, wobei die Funktionseinheiten (QF, ZF) einander bei einem realen oder simulierten Datenverkehr Nachrichten (N20, N30) über den Kommunikationsknoten (10) senden, wobei das Verfahren umfasst:
- Zuordnung von Häufigkeitswerten (H31, H13) betreffend Häufigkeiten, mit der eine jeweilige Firewallregel (FR) oder deren Bestandteile zur Überprüfung von Nachrichten (N20, N30) bei dem Datenverkehr angewendet wird, zu der jeweiligen Firewallregel (FR) oder deren Bestandteile durch ein Zuweisungsmittel der Generatorvorrichtung (GV),
- Bildung der Hardware-Firewallregeln (HR) anhand derjenigen Firewallregeln (FR) oder deren Bestandteile, die die größten Häufigkeitswerte (H31, H13) aufweisen, im Umfang der verfügbaren Hardware-Firewallregeln (HR) durch die Generatorvorrichtung (GV) und
- Bildung von Software-Firewallregeln (BSR, OSR) für Firewallregeln (FR) oder deren Bestandteile, die nicht in den Hardware-Firewallregeln (HR) abgebildet sind, durch die Generatorvorrichtung (GV).

14. Generatorvorrichtung (GV) zur Ermittlung von Firewall-Regeln für einen Kommunikationsknoten (10) eines Kommunikationsnetzwerks (6) eines Kraftfahrzeugs (5), wobei Steuergeräte (20, 30) des Kraftfahrzeugs (5) über den Kommunikationsknoten (10) miteinander verbunden sind und der Kommunikationsknoten (10) zur Übermittlung von Nachrichten (N20, N30) vorgesehen und ausgestaltet ist, anhand derer Funktionseinheiten (QF, ZF) der Steuergeräte (20, 30) einander Informationen übermitteln, wobei Kommunikationsbeziehungen (KD1, KD2) zwischen Funktionseinheiten (QF, ZF), die Bestandteile voneinander separater und jeweils mit dem Kommunikationsknoten (10) verbundener Steuergeräte (20, 30) bilden, in Kommunikationsbeziehungsdaten (KDB), insbesondere einer Kommunikationsbeziehungsdatenbank, gespeichert sind, wobei die Kommunikationsbeziehungsdaten (KDB) Quell-Adressdaten einer eine jeweilige Nachricht (N20, N30) gemäß der Kommunikationsbeziehung (KD1, KD2) sendenden Quell-Funktionseinheit (QF) und/oder Ziel-Adressdaten einer die Nachricht (N20, N30) empfangenden Ziel-Funktionseinheit (ZF) umfassen, wobei der Kommunikationsknoten (10) eine Firewall-Einrichtung (FW) zur Überprüfung von Nachrichten (N20, N30), die der Kommunikationsknoten (10) zwischen mit ihm verbundenen Steuergeräten (20, 30) übermitteln soll, anhand von Firewallregeln (FR) aufweist, **dadurch gekennzeichnet, dass** die Generatorvorrichtung (GV) ein Analysemittel (AM) zum Ermitteln von Firewallregeln (FR) anhand der Kommunikationsbeziehungsdaten (KDB) aufweist, wobei das Analysemittel (AM) eine Quell-Firewallregel (QR) anhand von der Quell-Adressdaten der Quell-Funktionseinheit (QF), die Nachrichten (N20, N30) gemäß einer jeweiligen Kommunikationsbeziehung (KD1, KD2) sendet und/oder eine Ziel-Firewallregel (ZR) anhand von Ziel-Adressdaten einer Ziel-Funktionseinheit (ZF), die Nachrichten (N20, N30) gemäß einer jeweiligen Kommunikationsbeziehung (KD1, KD2) empfängt, ermittelt, wobei die Quell-Firewallregel (QR) Filterkriterien aufweist und dafür vorgesehen ist, dass die Firewall-Einrichtung (FW) eine von der Quell-Funktionseinheit (QF) gesendete Nachricht (N20, N30) dann an die Ziel-Funktionseinheit (ZF) weiterleitet, wenn die in der Nachricht (N20, N30) enthaltene Quell-Adressdaten der Quell-Funktionseinheit (QF) die Filterkriterien der Quell-Firewallregel (QR) erfüllen, und wobei die Ziel-Firewallregel (ZR) Filterkriterien aufweist und dafür vorgesehen ist, dass die Firewall-Einrichtung (FW) eine an die Ziel-Funktionseinheit (ZF) gerichtete Nachricht (N20, N30) nur dann an die Ziel-Funktionseinheit (ZF) weiterleitet, wenn die in der Nachricht (N20, N30) enthaltenen Ziel-Adressdaten der Ziel-Funktionseinheit (ZF) die Kriterien der Ziel-Firewallregel (ZR) erfüllen.s

15. Generatorvorrichtung (GV) nach Anspruch 14, **dadurch gekennzeichnet, dass** sie als ein Programmmodul ausgestaltet ist oder ein Programmmodul enthält, wobei das Programmmodul durch einen Prozessor (81) ausführbaren Programmcode aufweist, wobei die Generatorvorrichtung die Schritte des Verfahrens nach einem der Ansprüche 1-13 bei Ausführung des Programmcodes ausführt.
